# EUROPÄISCHE PATENTSCHRIFT

(11) **EP 3 867 713 B1**
(45) Veröffentlichungstag und Bekanntmachung des Hinweises auf die Patenterteilung: **31.08.2022**
(21) Anmeldenummer: 19809434.4
(22) Anmeldetag: 22.11.2019
(51) Int. Cl.: G05B 19/4061, G05B 19/418, B65G 54/02, H02K 41/03, B66F 9/06

(54) **VORRICHTUNG UND VERFAHREN ZUM VERMEIDEN EINER KOLLISION BEIM ANTREIBEN VON WENIGSTENS ZWEI MOVERN AUF EINER ANTRIEBSFLÄCHE**
DEVICE AND METHOD FOR PREVENTING A COLLISION WHEN DRIVING AT LEAST TWO MOVING ELEMENTS ON A DRIVING SURFACE
DISPOSITIF ET PROCÉDÉ PERMETTENT D'ÉVITER UNE COLLISION LORS DE L'ENTRAÎNEMENT D'AU MOINS DEUX ÉLÉMENTS DE DÉPLACEMENT SUR UNE SURFACE D'ENTRAÎNEMENT

(30) Priorität: 26.11.2018 DE 102018129727
(43) Veröffentlichungstag der Anmeldung: 25.08.2021
(73) Patentinhaber: Beckhoff Automation GmbH, 33415 Verl (DE)
(72) Erfinder: PENNEKAMP, Hubertus, 33334 Gütersloh (DE); LUTHE, Thomas, 33415 Verl (DE); WIEDNER, Eva, 33161 Hövelhof (DE); WEBER, Tobias, 33332 Gütersloh (DE); NEUMANN, Klaus, 33330 Gütersloh (DE); WEDDEMANN, Alexander, 59558 Lippstadt (DE)
(74) Vertreter: Patentanwaltskanzlei WILHELM & BECK
(86) Internationale Anmeldenummer: PCT/EP2019/082298
(87) Internationale Veröffentlichungsnummer: WO 2020/109180

(56) Entgegenhaltungen:
- DE-A1-102009 008 529
- US-A1- 2011 093 134
- BYEOUNGDO KIM ET AL: "Probabilistic Vehicle Trajectory Prediction over Occupancy Grid Map via Recurrent Neural Network", ARXIV.ORG, CORNELL UNIVERSITY LIBRARY, 201 OLIN LIBRARY CORNELL UNIVERSITY ITHACA, NY 14853, 24. April 2017 (2017-04-24), XP080764919, DOI: 10.1109/ITSC.2017.8317943
- LE-ANH T ET AL: "A review of design and control of automated guided vehicle systems", EUROPEAN JOURNAL OF OPERATIONAL RESEARCH, ELSEVIER, AMSTERDAM, NL, Bd. 171, Nr. 1, 16. Mai 2006 (2006-05-16), Seiten 1-23, XP024933760, ISSN: 0377-2217, DOI: 10.1016/J.EJOR.2005.01.036 [gefunden am 2006-05-16]
- N N: "Flying Motion XPlanar", , 1. November 2018 (2018-11-01), Seiten 1-28, XP055668904, Gefunden im Internet: URL:https://download.beckhoff.com/download /Document/catalog/Beckhoff_XPlanar_d.pdf [gefunden am 2020-02-14]

## Beschreibung

Die Erfindung betrifft ein Verfahren und eine Vorrichtung zum Vermeiden einer Kollision beim Antreiben von wenigstens zwei Movern auf einer Antriebsfläche.

Planare Antriebssysteme können unter anderem in der Automatisierungstechnik, insbesondere der Fertigungstechnik, der Handhabungstechnik und der Verfahrenstechnik eingesetzt werden. Mittels planaren Antriebssystemen kann ein bewegliches Element, ein sogenannter Mover, einer Anlage einer Maschine in mindestens zwei linear unabhängigen Richtungen bewegt oder positioniert werden. Planare Antriebssysteme können einen permanenterregten elektromagnetischen Planarmotor mit einem planaren Stator und einem auf dem Stator in mindestens zwei Richtungen beweglichen Läufer, das heißt den Mover, umfassen. Ein derartiges planares Antriebssystem ist beispielsweise aus der WO 2016012160 A1 bekannt.

Bei einem permanenterregten elektromagnetischen Planarmotor wird dadurch eine Antriebskraft auf den Mover ausgeübt, dass stromdurchflossene Leiter mit Antriebsmagneten einer Magnetanordnung magnetisch wechselwirken. Die Erfindung betrifft insbesondere Ausgestaltungen von planaren Antriebsvorrichtungen, bei denen die Antriebsmagneten eines elektrischen Planarmotors an dem Mover und die stromdurchflossenen Leiter des Planarmotors in einer ortsfest angeordneten Antriebsfläche angeordnet sind.

Aus der EP 3 095 739 A1 ist eine Vorrichtung zum Antreiben wenigstens eines Movers auf einer Antriebsfläche bekannt, wobei Fahrwege für den Mover berechnet werden.

Aus der DE 10 2009 008529 A1 ist eine Vorrichtung gemäß dem Oberbegriff des Anspruchs 1 und ein Verfahren gemäß dem Oberbegriff des Anspruchs 8 bekannt.

Die Aufgabe der Erfindung besteht darin, eine verbesserte Vorrichtung und ein verbessertes Verfahren zum Vermeiden einer Kollision beim Antreiben von wenigstens zwei Movern auf einer Antriebsfläche bereitzustellen.

Die Aufgabe der Erfindung wird durch die unabhängigen Patentansprüche gelöst. Vorteilhafte Weiterbildungen sind in den abhängigen Ansprüchen angegeben.

Ein Vorteil der beschriebenen Vorrichtung und des beschriebenen Verfahrens besteht darin, dass mithilfe von wenig Rechenaufwand die Bewegung eines zweiten Movers bei der Wegplanung eines ersten Movers berücksichtigt wird. Zudem ist die Datenmenge, die ausgetauscht werden muss, geringer. Dazu wird ein geschätzter zweiter Fahrweg des zweiten Movers bei der Wegplanung des ersten Movers berücksichtigt. Da nicht ein präziser, für die Zukunft berechneter, zweiter Fahrweg berücksichtigt wird, ist der Vergleich zwischen dem geschätzten zweiten Fahrweg und dem ersten Fahrweg einfacher auszuführen. Der Vergleich zweier präziser Fahrwege ist deutlich rechenaufwendiger als der Vergleich zwischen einem präzisen und einem geschätzten Fahrweg. Eine Ungenauigkeit des zweiten Fahrweges, die sich durch die Schätzung des zweiten Fahrweges ergibt, wird in Kauf genommen. Bei der Wegplanung für den ersten Mover wird ein erster Fahrweg ermittelt. Der erste Fahrweg legt die Wegstrecke des ersten Mover für eine vorgegebene Zeit für die Zukunft fest.

Die Schätzung des zweiten Fahrweges kann von der Steuereinheit ausgeführt werden, die die Wegplanung für den ersten Mover durchführt. Zudem kann der geschätzte zweite Fahrweg auch von der Steuereinheit nur empfangen werden, so dass Rechenaufwand bei der Steuereinheit eingespart wird. Abhängig von der gewählten Ausführungsform wird der geschätzte zweite Fahrweg anhand einer aktuellen zweiten Bewegungsrichtung des zweiten Movers ermittelt. Beispielsweise kann mit dieser Schätzung auf einfache Weise überprüft werden, ob die zweite Bewegungsrichtung des zweiten Movers den ersten Fahrweg des ersten Movers überhaupt kreuzt. Für eine erste einfache Schätzung einer möglichen Kollision zwischen den zwei Movern kann diese Überprüfung verwendet werden.

In einer weiteren Ausführungsform wird zusätzlich zu der zweiten Bewegungsrichtung des zweiten Movers ein zweiter Fahrweg des zweiten Movers anhand einer aktuellen zweiten Geschwindigkeit und/oder einer zweiten Beschleunigung und/oder einer Änderung einer zweiten Beschleunigung des zweiten Movers ermittelt und berücksichtigt. Der zweite Fahrweg legt die zukünftige Position des zweiten Movers fest. Durch die Berücksichtigung der zweiten Geschwindigkeit des zweiten Movers kann zusätzlich zu der Bewegungsrichtung noch überprüft werden, ob der zweite Mover überhaupt in einer absehbaren Zeit den ersten Fahrweg des ersten Movers tatsächlich kreuzt. Zudem kann anhand des geschätzten zweiten Fahrweges überprüft werden, ob überhaupt eine Kollision zwischen dem ersten und dem zweiten Mover wahrscheinlich ist. Eine wahrscheinliche Kollision kann angenommen werden, wenn die Mover in einem vorgegebenen Zeitrahmen und in einem vorgegebenen Ortsbereich kollidieren. Die Wahrscheinlichkeit einer Kollision kann von verschiedenen Faktoren beeinflusst werden. Ein entscheidender Faktor ist die Zeit bis zur Kollision. Bei wachsender Zeit bis zur Kollision wird es immer unwahrscheinlicher, dass es zur Kollision kommt, da es immer unwahrscheinlicher wird, dass die geplanten bzw. abgeschätzten Fahrwege auch wirklich so abgefahren werden. Weitere Faktoren sind die bei einer Kollision vorliegende Überschneidungsflächen der Mover, d.h. ob sich die Mover vollflächig treffen oder nur tuschieren, und eventuell der Winkel zwischen den Geschwindigkeitsvektoren der Mover. Für eine einfache Schätzung reicht die aktuelle Geschwindigkeit des zweiten Movers aus. Für eine verbesserte Schätzung kann auch die Beschleunigung des zweiten Movers zusätzlich zu der Geschwindigkeit des zweiten Movers berücksichtigt werden. Für eine weiter verbesserte Schätzung kann auch die Änderung der Beschleunigung d.h. der Ruck des zweiten Movers zusätzlich zu der Beschleunigung des zweiten Movers berücksichtigt werden. Für die Überprüfung der Kollision wird für den ersten Mover der berechnete erste Fahrweg des ersten Movers verwendet.

In einer Ausführungsform wird der geschätzte zweite Fahrweg anhand einer linearen Extrapolation des aktuellen zweiten Fahrweges des zweiten Movers bei gleichbleibender Bewegungsrichtung und/oder gleichbleibender Geschwindigkeit und/oder gleichbleibender Beschleunigung und/oder gleichbleibendem Ruck ermittelt. Diese lineare Extrapolation ergibt dann einen vereinfachten geschätzten Fahrweg, zum Beispiel einen geschätzten Fahrweg mit einer geradlinigen Bewegung bei der aktuellen Bewegungsrichtung, bzw. einem geschätzten Fahrweg mit konstanter Geschwindigkeit bei der aktuellen Geschwindigkeit, bzw. einen geschätzten Fahrweg mit konstanter Beschleunigung bei der aktuellen Beschleunigung, bzw. einen geschätzten Fahrweg mit konstantem Ruck bei der aktuellen Beschleunigung. Die lineare Extrapolation des aktuellen zweiten Fahrweges des zweiten Movers hat den Vorteil, dass unter anderem die Datenmenge des geschätzten zweiten Fahrweges erheblich reduziert ist, da der geschätzte zweite Fahrweg zum Beispiel analytisch d.h. mittels einer Formel dargestellt werden kann.

In einer Ausführungsform wird der erste Fahrweg für den ersten Mover in vorgegebenen Zeitabständen wiederholt ermittelt. Zudem wird in einer weiteren Ausführungsform der geschätzte zweite Fahrweg in vorgegebenen Zeitabständen ermittelt oder empfangen. Weiterhin wird der geschätzte zweite Fahrweg des zweiten Movers bei der Wegplanung des ersten Fahrweges des ersten Movers in vorgegebenen Zeitabständen wiederholt berücksichtigt. Die Zeitabstände können in einem Bereich von 100µs bis 400µs beispielsweise liegen. Zudem können die Zeitabstände auch im Bereich von 2ms liegen. Auf diese Weise wird während der Bewegung des ersten Movers und/oder des zweiten Movers eine laufende Aktualisierung durchgeführt.

In einer weiteren Ausführungsform ist die Steuereinheit ausgebildet, um den geschätzten zweiten Fahrweg bei der Wegplanung des ersten Fahrweges zu berücksichtigen, wenn innerhalb eines vorgegebenen Zeitraumes eine Kollision des ersten Movers mit dem zweiten Mover wenigstens eine vorgegebene Wahrscheinlichkeit aufweist. Eine Kollision kann als wahrscheinlich angenommen werden, wenn die Mover unter Berücksichtigung des ersten Fahrweges und des geschätzten zweiten Fahrweges sich in einem vorgegebenen Zeitbereich in einem vorgegebenen Ortsbereich aufhalten. Der Zeitbereich und der Ortsbereich können abhängig von der Genauigkeit der Schätzung entsprechend gewählt werden. Auch durch diese Schätzung kann eine unnötige Berücksichtigung einer möglichen Kollision eingespart werden.

In einer weiteren Ausführungsform wird der geschätzte zweite Fahrweg bei der Wegplanung des ersten Fahrweges nur dann berücksichtigt, wenn der geschätzte zweite Fahrweg innerhalb eines vorgegebenen Zeitraumes den ermittelten ersten Fahrweg kreuzt. Auf diese Weise kann Rechenzeit eingespart werden, wenn aufgrund der Schätzung für den Zeitraum kein Kreuzen der Fahrwege erkannt wird und somit eine Kollision ausgeschlossen werden kann. Der vorgegebene Zeitraum kann beispielsweise in einem Bereich von 100µs bis 2s liegen.

In einer weiteren Ausführungsform wird auch bei der Wegplanung des zweiten Movers ein geschätzter erster Fahrweg des ersten Movers berücksichtigt. Somit kann durch eine gegenseitige Berücksichtigung der geschätzten Fahrwege eine mögliche Kollision frühzeitig erkannt und die Wegplanung des ersten und/oder des zweiten Movers entsprechend verändert werden, um die Kollision zu vermeiden. Somit kann zur Vermeidung der Kollision nicht nur der erste Fahrweg des ersten Movers, sondern auch der zweite Fahrweg des zweiten Movern geändert werden.

In analoger Weise wird auch für wenigstens zwei Mover eine Kollision vermieden. Bei wenigstens zwei Movern werden Prioritäten für die Mover vergeben, um eindeutige Vorfahrtsregeln und Ausweichregeln verwenden zu können. Nur für Mover mit niedrigerer Priorität wird dabei eine Änderung ihres Fahrweges aufgrund der Schätzung der Fahrwege von Movern mit höherer Priorität durchgeführt.

In einer Ausführung weist die Steuereinheit zumindest eine erste Teilsteuereinheit und eine zweite Teilsteuereinheit auf, wobei die erste Wegplanung für den ersten Mover von der ersten Teilsteuereinheit und die zweite Wegplanung für den zweiten Mover von einer zweiten Teilsteuereinheit, oder wobei die erste Wegplanung für den ersten Mover von einem ersten Planungsprogramm und die zweite Wegplanung für den zweiten Mover von einem zweiten Planungsprogramm ausgeführt wird, und wobei der geschätzte erste Fahrweg des ersten Movers von der ersten Teilsteuereinheit oder von dem ersten Planungsprogramm ermittelt wird, wobei der geschätzte zweite Fahrweg des zweiten Movers von der zweiten Teilsteuereinheit oder von dem zweiten Planungsprogramm ermittelt wird, und wobei der geschätzte zweite Fahrweg von der ersten Teilsteuereinheit oder von dem ersten Planungsprogramm empfangen wird, und wobei der geschätzte erste Fahrweg von der zweiten Teilsteuereinheit oder von dem zweiten Planungsprogramm empfangen wird. Auf diese Weise kann eine schnelle Wegplanung durchgeführt werden.

Es wird ein Verfahren zum Vermeiden einer Kollision beim Antreiben von wenigstens zwei Movern auf einer Antriebsfläche vorgeschlagen, wobei jeder Mover wenigstens einen zweiten Magnetfelderzeuger aufweist, wobei die Vorrichtung mehrere plattenförmige Sektoren aufweist, wobei die Sektoren jeweils zumindest einen elektrischen Magnetfelderzeuger zum Erzeugen von Magnetfeldern aufweisen, wobei die Sektoren die Antriebsfläche bilden, wobei eine erste Wegplanung für den ersten Mover ausgeführt wird, wobei ein geschätzter zweiter Fahrweg des zweiten Movers ermittelt oder empfangen wird, wobei der geschätzte zweite Fahrweg des zweiten Movers bei der Wegplanung des ersten Movers berücksichtigt wird, um einen ersten Fahrweg für den ersten Mover in der Weise zu ermitteln, dass eine Kollision der Mover vermieden wird.

In einer Ausführung werden die Magnetfelderzeuger der Sektoren in der Weise mit Strom versorgt, dass der erste Mover entlang des ermittelten ersten Fahrweges über die Antriebsfläche bewegbar ist. Dadurch wird die Wegplanung in eine Bewegung des Movers umgesetzt.

In einer Ausführung wird der geschätzte zweite Fahrweg anhand einer aktuellen zweiten Bewegungsrichtung des zweiten Movers ermittelt. Auf diese Weise ist eine einfache Schätzung des zweiten Fahrweges möglich.

In einer Ausführung wird der geschätzte zweite Fahrweg anhand einer aktuellen zweiten Geschwindigkeit und/oder zweiten Beschleunigung und/oder einer Änderung der zweiten Beschleunigung des zweiten Movers ermittelt. Dadurch ist eine genauere Schätzung des zweiten Fahrweges auf einfache Weise möglich.

In einer Ausführung wird der geschätzte zweite Fahrweg anhand einer linearen Extrapolation des aktuellen zweiten Fahrweges des zweiten Movers bei gleichbleibender zweiter Bewegungsrichtung und/oder zweiter Geschwindigkeit und/oder zweiter Beschleunigung und/oder Änderung der zweiten Beschleunigung ermittelt. Auf diese Weise kann die Schätzung des zweiten Fahrweges präziser mit wenig Rechenaufwand durchgeführt werden.

In einer Ausführung wird der geschätzte zweite Fahrweg des zweiten Movers in vorgegebenen Zeitabständen wiederholt ermittelt oder empfangen und bei der ersten Wegplanung des ersten Fahrweges des ersten Movers in den vorgegebenen Zeitabständen wiederholt berücksichtigt. Durch die Wiederholung der ersten Wegplanung kann trotz der einfachen Schätzung des zweiten Fahrweges die Kollisionsüberwachung relativ präzise durchgeführt werden.

In einer Ausführung werden die Schätzung des zweiten Fahrweges des zweiten Movers und/oder der Empfang des geschätzten zweiten Fahrweges des zweiten Movers wiederholt, wobei die erste Wegplanung des ersten Fahrweges des ersten Movers in Zeitabständen von 100µs bis 2000µs unter Berücksichtigung des geschätzten zweiten Fahrweges des zweiten Movers wiederholt durchgeführt wird.

In einer Ausführung wird der geschätzte zweite Fahrweg bei der ersten Wegplanung des ersten Fahrweges berücksichtigt, wenn der geschätzte zweite Fahrweg innerhalb eines vorgegebenen Zeitraumes den ermittelten ersten Fahrweg kreuzt, wobei insbesondere der Zeitraum im Bereich von 100µs bis 2s liegt. Dadurch wird eine ausreichende Überwachung einer Kollision erreicht.

In einer Ausführung wird der geschätzte zweite Fahrweg bei der ersten Wegplanung des ersten Fahrweges berücksichtigt, wenn innerhalb eines vorgegebenen Zeitraumes eine Kollision des ersten Movers und des zweiten Movers wahrscheinlich ist.

In einer Ausführung wird eine zweite Wegplanung für den zweiten Mover ausgeführt, wobei ein geschätzter erster Fahrweg des ersten Movers bei der zweiten Wegplanung des zweiten Movers berücksichtigt wird, um einen zweiten Fahrweg für den zweiten Mover in der Weise zu ermitteln, dass eine Kollision der Mover vermieden wird, und wobei insbesondere die Magnetfelderzeuger in der Weise mit Strom versorgt werden, dass der zweite Mover entlang des ermittelten zweiten Fahrweges über die Antriebsfläche bewegbar ist.

In einer Ausführung sind eine erste und eine zweite Teilsteuereinheit vorgesehen, wobei die erste Wegplanung für den ersten Mover von der ersten Teilsteuereinheit und die zweite Wegplanung für den zweiten Mover von der zweiten Teilsteuereinheit, oder wobei die erste Wegplanung für den ersten Mover von einem ersten Planungsprogramm und die zweite Wegplanung für den zweiten Mover von einem zweiten Planungsprogramm ausgeführt wird, und wobei der geschätzte erste Fahrweg des ersten Movers von der ersten Teilsteuereinheit oder von dem ersten Planungsprogramm ermittelt wird, wobei der geschätzte zweite Fahrweg des zweiten Movers von der zweiten Teilsteuereinheit oder von dem zweiten Planungsprogramm ermittelt wird, und wobei der geschätzte zweite Fahrweg von der ersten Teilsteuereinheit oder von dem ersten Planungsprogramm empfangen wird, und wobei der geschätzte erste Fahrweg von der zweiten Teilsteuereinheit oder von dem zweiten Planungsprogramm empfangen wird.

Es wird eine Steuereinheit vorgeschlagen, die ausgebildet ist, eines der beschriebenen Verfahren auszuführen.

Es wird ein Computerprogramm mit Befehlen vorgeschlagen, die beim Ablaufen auf einem Computer eines der beschriebenen Verfahren ausführen.

Die Erfindung wird nachfolgend anhand von Ausführungsbeispielen und unter Bezugnahmen auf Figuren näher erläutert. Dabei zeigen jeweils in schematischer Darstellung.
- Figur 1: ein planares Antriebssystem zum Antreiben eines Movers auf einer Antriebsfläche;
- Figur 2: eine Ansicht eines weiteren Antriebssystems mit sechs nebeneinander angeordneten Statormodulen;
- Figur 3: den Mover des in Fig. 1 dargestellten planaren Antriebssystems mit einer Magnetanordnung;
- Figur 4: eine perspektivische Ansicht eines Teils des Antriebssystems entsprechend Fig. 1;
- Figur 5: eine Explosionsansicht eines Sektors des in Fig. 1 dargestellten Antriebssystems mit einer ersten, zweiten, dritten und vierten Statorlage;
- Figur 6: die in Fig. 5 dargestellten Statorlagen des ersten Sektors der Vorrichtung mit einzelnen Statorsegmenten;
- Fig. 7: einen Teilausschnitt einer Antriebsfläche, auf der sich zwei Mover zu einem ersten Zeitpunkt bewegen, und eine Steuereinheit;
- Fig. 8: den Teilausschnitt einer Antriebsfläche gemäß Fig. 7, auf der sich zwei Mover zu einem zweiten Zeitpunkt bewegen;
- Fig. 9: den Teilausschnitt einer Antriebsfläche gemäß Fig. 7, auf der sich zwei Mover zu einem dritten Zeitpunkt bewegen;
- Fig. 10: einen schematischen Programmablauf zur Durchführung des Verfahrens;
- Fig. 11: einen schematischen Programmablauf zur Durchführung eines weiteren Verfahrens und
- Fig. 12: ein System mit zwei Steuereinheiten.

Die Erfindung betrifft im Wesentlichen Weiterentwicklungen der in den Veröffentlichungen WO 2013/059934 A1, WO 2015/017933 A1, WO 2015/179962 A1, WO 2015/184553 A1, WO 2015/188281 A1 und WO 2017/004716 A1 offenbarten planaren Antriebssysteme.

Außerdem betrifft die Erfindung Weiterentwicklungen der in den deutschen Patentanmeldungen 10 2017 131 304.4,10 2017 131 314.1, und 102017 131 321.4, beim DPMA eingereicht am 27.12.2017, offenbarten planaren Antriebssysteme.

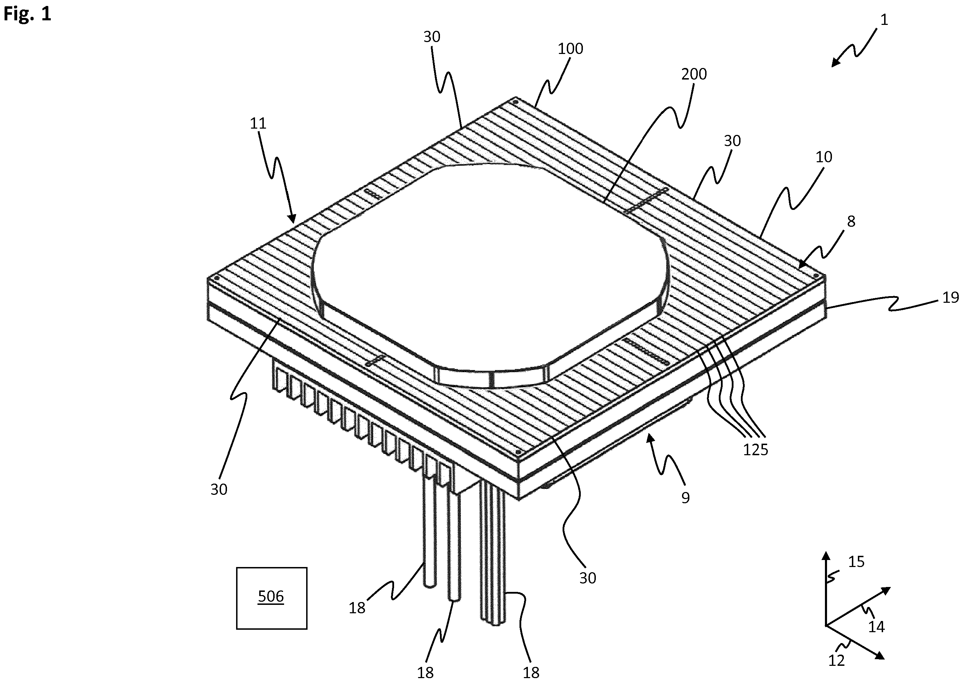

**Fig. 1** zeigt eine Vorrichtung zum Antreiben wenigstens eines Movers 200 auf einer Antriebsfläche in Form eines Planarantriebssystems 1 mit einem Statormodul 10 und einem Läufer, der durch den Mover 200 gebildet wird.

Das Statormodul 10 umfasst ein Modulgehäuse 19 und eine Statoreinheit 100. Das Statormodul 10 weist eine Oberseite 8 und eine der Oberseite 8 gegenüberliegende Unterseite 9 auf. Die Statoreinheit 100 ist in einer von der Unterseite 9 zu der Oberseite 8 orientierten vertikalen Richtung 15 oberhalb des Modulgehäuses 19 und an der Oberseite 8 des Statormoduls 10 angeordnet. Die Statoreinheit 100 ist als ein Planarstator ausgebildet und weist an der Oberseite 8 des Statormoduls 10 eine ebene, d. h. planare, Statorfläche 11 auf. Die Statorfläche 11 bildet zugleich eine Oberfläche des Statormoduls 10.

Die Statorfläche 11 ist senkrecht zu einer vertikalen Richtung 15 orientiert und erstreckt sich über die gesamte Oberseite 8 der Statoreinheit 100 und des Statormoduls 10 entlang der Richtungen 12 und 14. Die Statoreinheit 100 umfasst an der Statorfläche 11 mindestens einen mit einem Antriebsstrom beaufschlagbaren Leiterstreifen 125. Die Statoreinheit 100 kann, wie dargestellt, an der Statorfläche 11 eine Mehrzahl der Leiterstreifen 125 aufweisen. Die Leiterstreifen 125 können von einer Steuereinheit 506 jeweils mit einem Antriebsstrom beaufschlagt werden. Mittels der Antriebsströme in den Leiterstreifen 125 kann ein Magnetfeld erzeugt werden, welches den Mover 200 in Wechselwirkung mit in Fig. 1 nicht dargestellten Antriebsmagneten des Movers 200 antreibt. Der Mover 200 und die Statoreinheit 100 mit den stromdurchflossenen Leiterstreifen 125 bilden einen elektromagnetischen Planarmotor. Die Leiterstreifen 125 bilden Spulenleiter der Statoreinheit 100 und können auch als Spulenleiter oder Magnetfelderzeuger bezeichnet werden.

Der Mover 200 ist im Betrieb beweglich über der Statorfläche 11 des Statormoduls 10 angeordnet und kann im Betrieb sowohl in einer ersten Richtung 12, als auch in einer zweiten Richtung 14 angetrieben werden. Die erste Richtung 12 und die zweite Richtung 14 sind linear unabhängig. Insbesondere können die erste Richtung 12 und die zweite Richtung 14, wie in Fig. 1 dargestellt, senkrecht zueinander ausgerichtet sein. Die erste Richtung 12 und die zweite Richtung 14 sind jeweils parallel zu der Statorfläche 11 und senkrecht zu der vertikalen Richtung 15 orientiert. Indem der Mover 200 zugleich in der ersten Richtung 12, als auch in der zweiten Richtung 14 angetrieben wird, kann der Mover 200 über der Statorfläche 11 in einer beliebigen Richtung angetrieben werden. Der Mover 200 kann im Betrieb schwebend über der Statorfläche 11 gehalten werden, beispielsweise durch eine magnetische Wechselwirkung zwischen den Antriebsmagneten und geeigneten Antriebsströmen in den Leiterstreifen 125. Neben einem Antreiben des Movers 200 in der ersten und/oder zweiten Richtung 12, 14 ist auch ein Antreiben in der dritten, vertikalen Richtung 15 möglich. Zudem kann der Mover 200 auch um seine Achse gedreht werden. Die Leiterstreifen stellen Leiterbahnen dar.

Die Statorfläche 11 ist rechteckig ausgebildet. Insbesondere kann die Statorfläche 11, wie dargestellt, quadratisch ausgebildet sein. Die Statorfläche 11 wird durch vier jeweils gerade Außenkanten 30 begrenzt. Jeweils zwei einander gegenüberliegende Außenkanten 30 sind parallel zu der ersten Richtung 12 und zwei einander gegenüberliegende weitere Außenkanten 30 sind parallel zu der zweiten Richtung 14 orientiert.

Eine Ausdehnung der Statoreinheit 100 in der vertikalen Richtung 15 ist kleiner als eine Ausdehnung der Statoreinheit 100 in der ersten und der zweiten Richtung 12, 14. Die Statoreinheit 100 bildet daher einen flachen in der ersten und zweiten Richtung 12, 14 ausgedehnten Quader oder eine in der ersten und zweiten Richtung 12, 14 ausgedehnte Platte.

An der Unterseite 9 des Statormoduls 10 oder an der Unterseite des Modulgehäuses 19 können weitere Komponenten an dem Modulgehäuse 19 oder dem Statormodul 10 angeordnet sein. Diese weiteren Komponenten reichen in der ersten Richtung 12 oder in der zweiten Richtung 14 höchstens bis an die Außenkanten 30 der Statoreinheit 100, so dass die weiteren Komponenten die Außenkanten 30 der Statoreinheit 100 in der ersten oder der zweiten Richtung 12, 14 nicht überragen.

An der Unterseite des Modulgehäuses 19 sind in Fig. 1 nicht dargestellte Anschlüsse angeordnet zur Verbindung des Statormoduls 10 mit mehreren Anschlussleitungen 18. Die Anschlussleitungen 18 können beispielsweise eine Eingangsleitung eines Datennetzwerks, eine Ausgangsleitung des Datennetzwerks und eine Energieversorgungsleitung zur Versorgung des Statormoduls 10 mit elektrischer Energie umfassen. Zudem kann eine Steuereinheit 506 mit einer Anschlussleitung 18 verbunden sein. Insbesondere kann dem Statormodul 10 über die Energieversorgungsleitung elektrische Energie zur Erzeugung der Antriebsströme zugeführt werden. Über das Datennetzwerk kann das Statormodul 10 mit einer Steuereinheit des Planarantriebssystems verbunden sein, wobei die Steuereinheit des Planarantriebssystems von der Steuereinheit 506 gebildet sein kann. Mittels des Datennetzwerks können beispielsweise Steuerdaten zum Steuern des Movers 200 bzw. zum Steuern der zielgerichteten Beaufschlagen der Leiterstreifen 125 mit geeigneten Antriebsströmen mit der Steuereinheit 506 ausgetauscht werden.

Die Statorfläche 11 kann in der ersten Richtung 12 eine Ausdehnung zwischen 100mm und 500mm aufweisen, insbesondere zwischen 120mm und 350mm, insbesondere von 240mm. Die Statorfläche 11 kann in der zweiten Richtung 12 eine Ausdehnung zwischen 100mm und 500mm, insbesondere zwischen 120mm und 350mm, insbesondere von 240mm aufweisen. Das Statormodul 10 kann in der vertikalen Richtung 15 eine Ausdehnung zwischen 10mm und 100mm, insbesondere zwischen 15mm und 60mm, insbesondere von 30mm aufweisen. Das Modulgehäuse 19 kann in der vertikalen Richtung 15 eine Ausdehnung zwischen 8mm und 80mm, insbesondere zwischen 13mm und 55mm, insbesondere von 26,6mm aufweisen. Das Modulgehäuse 19 kann in der ersten und/oder zweiten Richtung 12, 14 die gleiche Ausdehnung aufweisen wie die Statorfläche 11.

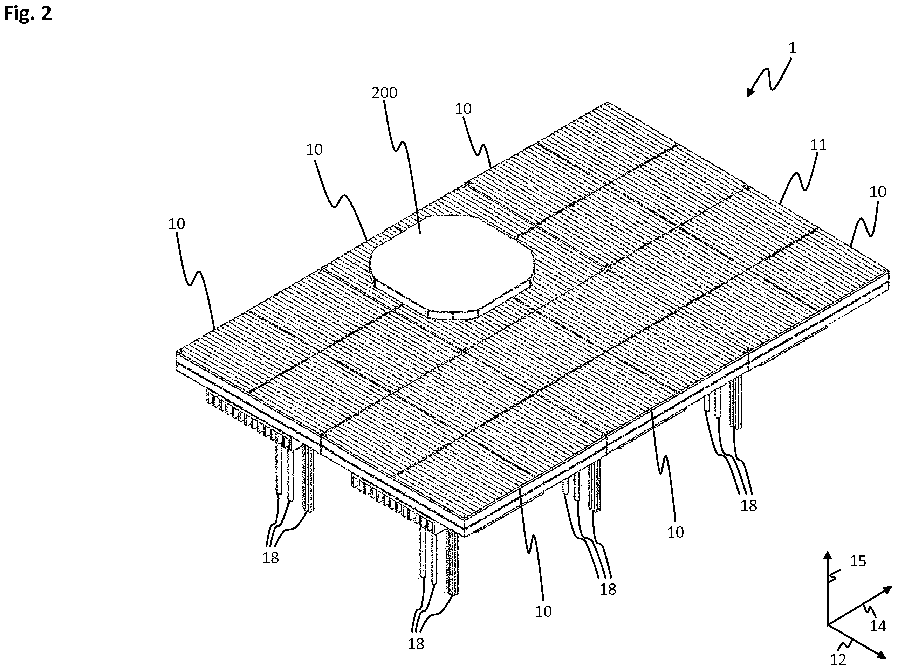

Mehrere Exemplare des Statormoduls 10 können derart nebeneinander angeordnet werden, dass die Außenkanten 30 benachbarter Statormodule 10 aneinander liegen und die Statorflächen 11 der Statormodule 10 eine zusammenhängende Antriebsfläche bilden, über die der Mover 200 unterbrechungsfrei bewegt werden kann, wie in Fig. 2 dargestellt ist. Da die Seitenflächen des Statormoduls 10 an den Außenkanten 30 bündig mit der Statorfläche 11 abschließen, können die Statorflächen 11 von zwei nebeneinander angeordneten Statormodulen 10 nahezu nahtlos aneinander anschließend angeordnet werden, indem die Statormodule 10 mit aneinander liegenden Seitenflächen der Statoreinheiten 100 oder aneinander liegenden Außenkanten 30 der Statorflächen 11 angeordnet werden.

Benachbarte Statormodule 10 sind jeweils derart aneinander anschließend angeordnet, dass die Außenkanten 30 der Statorflächen 11 benachbarter Statormodule 10 aneinander liegen. Dadurch bilden die Statorflächen 11 der Statormodule 10 eine zusammenhängende, planare Antriebsfläche für den Mover 200. Der Mover 200 kann nahtlos von der Statorfläche 11 eines der Statormodule 10 auf die oder über die Statorfläche 11 des benachbarten Statormoduls 10 bewegt werden. Jedem der Statormodule 10 können über jeweils eigene Anschlussleitungen 18 Steuersignale und/oder Energie zugeführt werden. Alternative, hier nicht dargestellte, Ausführungsformen der Statormodule 10 können auch elektrische Verbindungselemente aufweisen, mittels derer Steuersignale und/oder elektrische Energie von einem Statormodul 10 zum benachbarten Statormodul 10 übertragen werden kann. Derartige Verbindungselemente können beispielsweise an den Seitenflächen der Statormodule 10 angeordnet sein. Die Verbindungselemente können als Steckverbinder oder als aneinander anordbare Kontaktflächen ausgebildet sein.

Bei alternativen, hier ebenfalls nicht dargestellten Ausführungsformen können die Statormodule 10 auch sternförmig über jeweils eigene Anschlussleitungen an eine zentrale Energieversorgungseinrichtung und/oder eine zentrale Steuereinheit angeschlossen sein.

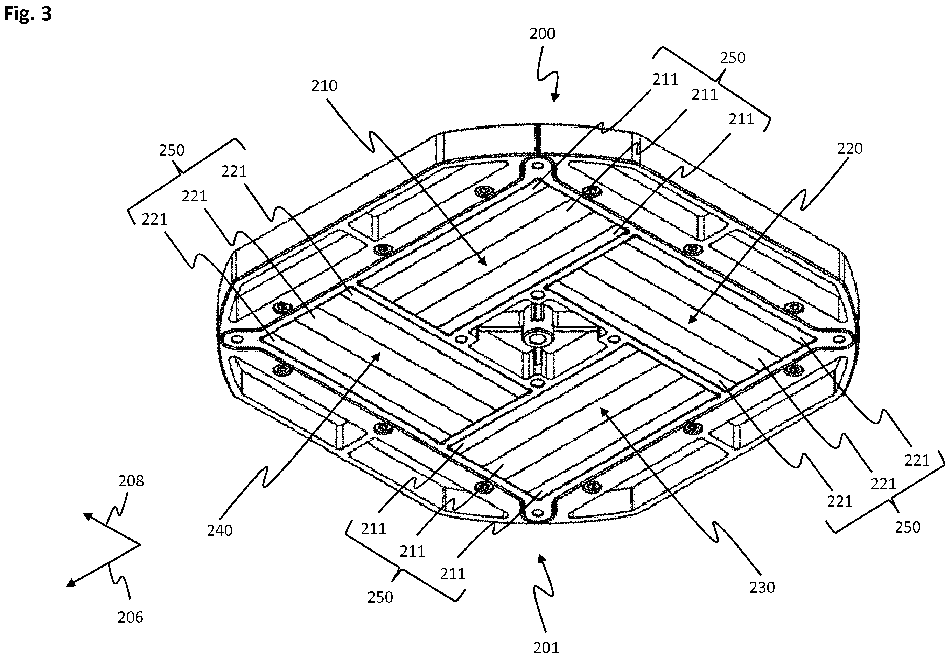

**Fig. 3** zeigt den Läufer, d. h. den Mover 200, in einer Ansicht von unten auf eine Unterseite des Movers 200. Der Mover 200 weist an der Unterseite eine Magnetanordnung 201 auf. Die Magnetanordnung 201 ist rechteckig, insbesondere quadratisch, ausgebildet und umfasst mehrere Magneten. Die Unterseite des Movers 200 ist, insbesondere im Bereich der Magneten der Magnetanordnung 201, eben bzw. planar ausgebildet. Im Betrieb ist die Unterseite des Movers 200 mit der Magnetanordnung 201 im Wesentlichen parallel zu der Statorfläche 11 orientiert und der Statorfläche 11 zugewandt angeordnet.

Die Magnetanordnung 201 umfasst eine erste Magneteinheit 210, eine zweite Magneteinheit 220, eine dritte Magneteinheit 230 und eine vierte Magneteinheit 240. Die erste Magneteinheit 210 und die dritte Magneteinheit 230 weisen jeweils in einer ersten Läuferrichtung 206 länglich ausgedehnte und entlang einer zu der ersten Läuferrichtung 206 senkrecht orientierten zweiten Läuferrichtung 208 nebeneinander angeordnete Antriebsmagnete 211 auf. Insbesondere können die erste und die dritte Magneteinheit 210, 230 jeweils drei Antriebsmagnete 211 aufweisen. Die zweite Magneteinheit 220 und die vierte Magneteinheit 240 weisen jeweils in der ersten Läuferrichtung 206 nebeneinander angeordnete und entlang der zweiten Läuferrichtung 208 länglich ausgedehnte weitere Antriebsmagnete 221 auf. Die erste und dritte Magneteinheit 210, 230 dient im Betrieb einem Antreiben des Movers 200 in der zweiten Läuferrichtung 208 und die zweite und vierte Magneteinheit 220, 240 dient im Betrieb einem Antreiben des Movers 200 in der ersten Läuferrichtung 206. Die Antriebsmagneten 211 der ersten und dritten Magneteinheit 210, 230 und die weiteren Antriebsmagneten 221 der zweiten und vierten Magneteinheit 220, 240 sind jeweils senkrecht zu der ersten und der zweiten Läuferrichtung 206, 208 magnetisiert.

Die Antriebsmagneten 211 und/oder weiteren Antriebsmagneten 221 stellen zweite Magnetfelderzeuger 250 dar. Die zweiten Magnetfelderzeuger 250 können auch andere Materialien, Funktionsprinzipien und/oder Formen aufweisen.

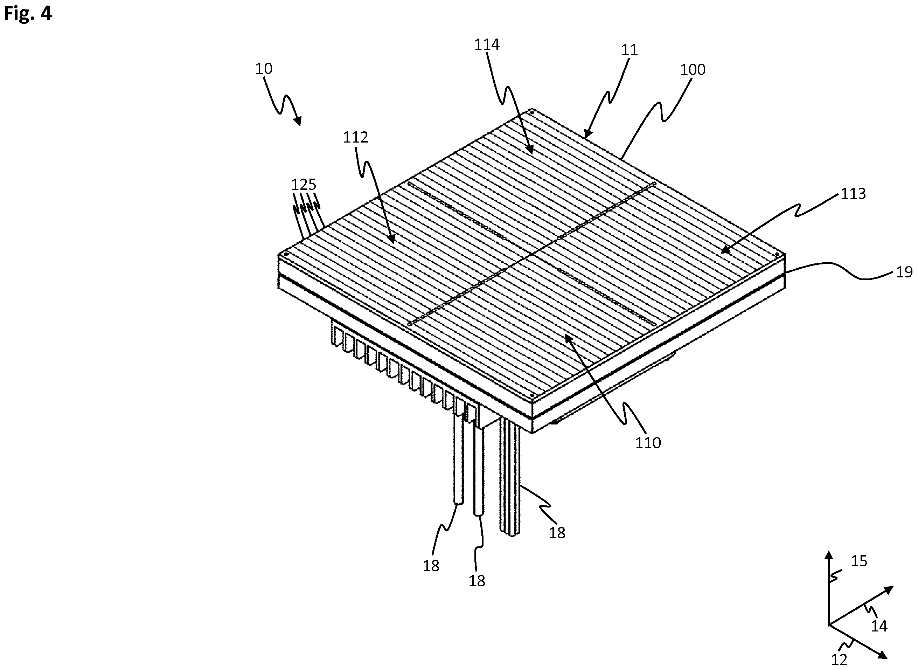

**Fig. 4** zeigt das Statormodul 10 des Planarantriebssystems 1 in einer perspektivischen Ansicht ohne den Mover 200. Die Statoreinheit 100 des Statormoduls 10 umfasst einen ersten Statorsektor 110, einen zweiten Statorsektor 112, einen dritten Statorsektor 113 und einen vierten Statorsektor 114. Die Statorsektoren 110, 112, 113, 114 umfassen ihrerseits jeweils einen Teil der an der Statorfläche 11 der Statoreinheit 100 angeordneten Leiterstreifen 125. Jeder der Leiterstreifen 125 an der Statorfläche 11 ist vollständig in einem der Statorsektoren 110, 112, 113, 114 angeordnet. Die Statorsektoren 110, 112, 113, 114 sind rechteckig ausgebildet. Insbesondere können die Statorsektoren 110, 112, 113, 114 quadratisch ausgebildet sein, so dass eine Ausdehnung der Statorsektoren 110, 112, 113, 114 in der ersten Richtung 12 einer Ausdehnung der Statorsektoren 110, 112, 113, 114 in der zweiten Richtung 14 entspricht.

Die Statorsektoren 110, 112, 113, 114 umfassen jeweils ein Viertel der Fläche, d.h. einen Quadranten, der Statoreinheit 100.

Innerhalb der Statorsektoren 110, 112, 113, 114 sind die Leiterstreifen 125 in mehreren übereinanderliegenden Statorlagen oder Statorebenen angeordnet, wobei jede der Statorlagen lediglich Leiterstreifen 125 umfasst, die entweder im Wesentlichen entlang der ersten Richtung 12 oder im Wesentlichen entlang der zweiten Richtung 14 länglich ausgedehnt sind. Von der Ausdehnung der Leiterstreifen 125 abgesehen und soweit im Folgenden keine Unterschiede beschrieben werden, sind die Statorsektoren 110, 112, 113, 114 auf den unterschiedlichen Statorlagen identisch ausgebildet. Bei der in Fig. 4 dargestellten Statoreinheit 100 des Statormoduls 10 umfasst die Statorlage an der Statorfläche 11 lediglich Leiterstreifen 125, welche entlang der ersten Richtung 12 länglich ausgedehnt und entlang der zweiten Richtung 14 nebeneinander und aneinander anschließend angeordnet sind.

Die in Fig. 4 sichtbare Statorlage an der Statorfläche 11 bildet eine erste Statorlage der Statoreinheit 100. In der vertikalen Richtung 15 unterhalb der ersten Statorlage umfasst die Statoreinheit 100 mindestens noch eine zweite Statorlage.

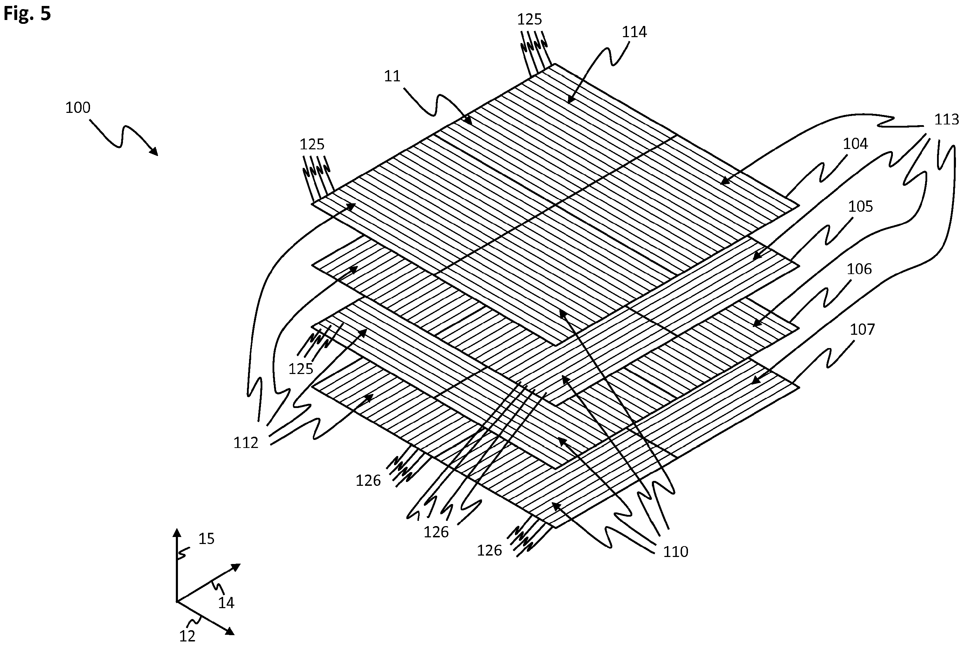

**Fig. 5** zeigt eine schematische perspektivische Darstellung einer Explosionsansicht der Statoreinheit 100 mit den einzelnen Statorlagen.

Die Statoreinheit 100 umfasst in der vertikalen Richtung 15 unter der an der Statorfläche 11 angeordneten ersten Statorlage 104 eine zweite Statorlage 105, unter der zweiten Statorlage 105 eine dritte Statorlage 106 und unter der dritten Statorlage 106 eine vierte Statorlage 107. Soweit im Folgenden keine Unterscheide beschrieben werden, sind die zweite, dritte und vierte Statorlage 105, 106, 107 ausgebildet wie die in Fig. 4 dargestellte erste Statorlage 104 an der Statorfläche 11 der Statoreinheit 100.

Die ersten bis vierten Statorsektoren 110, 112, 113, 114 umfassen in der dritten Statorlage 106, wie in der ersten Statorlage 104, entlang der ersten Richtung 12 länglich ausgedehnte und in der zweiten Richtung 14 nebeneinander und aneinander anschließend angeordnete Leiterstreifen 125. In der zweiten Statorlage 105 und in der vierten Statorlage 107 umfassen die ersten bis vierten Statorsektoren 110, 112, 113, 114 weitere Leiterstreifen 126. Soweit im Folgenden keine Unterschiede beschrieben werden, sind die weiteren Leiterstreifen 126 ausgebildet wie die Leiterstreifen 125 in der ersten Statorlage 104 und in der dritten Statorlage 106. Anders als die Leitersteifen 125 der ersten und dritten Statorlage 104, 106, sind die weiteren Leiterstreifen 126 der zweiten und vierten Statorlage 105, 107 entlang der zweiten Richtung 14 länglich ausgedehnt und in der ersten Richtung 12 nebeneinander und aneinander anschließend angeordnet.

Die ersten bis vierten Statorsektoren 110, 112, 113, 114 umfassen in der ersten und dritten Statorlage 104, 106 ausschließlich die entlang der ersten Richtung 12 länglich ausgedehnten Leiterstreifen 125 und nicht auch noch zusätzlich die entlang der zweiten Richtung 14 länglich ausgedehnten weiteren Leiterstreifen 126. Ebenso umfassen die ersten bis vierten Statorsektoren 110, 112, 113, 114 in der zweiten und vierten Statorlage 105, 107 ausschließlich die entlang der zweiten Richtung 14 länglich ausgedehnten weiteren Leiterstreifen 126 und nicht auch noch zusätzlich die entlang der ersten Richtung 12 länglich ausgedehnten Leiterstreifen 125.

Die ersten bis vierten Statorsektoren 110, 112, 113, 114 weisen in allen ersten bis vierten Statorlagen 104, 105, 106, 107 jeweils die gleichen Abmessungen auf. Insbesondere weisen die ersten bis vierten Statorsektoren 110, 112, 113, 114 in allen ersten bis vierten Statorlagen 104, 105, 106, 107 in der ersten Richtung 12 und in der zweiten Richtung 14 jeweils gleiche Abmessungen auf.

Die Leiterstreifen 125 und weiteren Leiterstreifen 126 übereinander angeordneter erster bis vierter Statorlagen 104, 105, 106, 107 sind jeweils elektrisch isoliert voneinander ausgebildet. Beispielsweise können die ersten bis vierten Statorlagen 104, 105, 106, 107 jeweils als voneinander isolierte Leiterbahnlagen einer mehrlagigen Leiterplatte ausgebildet sein.

Die ersten bis vierten Statorsektoren 110, 112, 113, 114 sind unabhängig voneinander bestrombar ausgebildet. Insbesondere sind die Leiterstreifen 125 und die weiteren Leiterstreifen 126 der ersten bis vierten Statorsektoren 110, 112, 113, 114 auf der Statoreinheit 100 elektrisch isoliert voneinander ausgebildet.

Während die Leiterstreifen 125 und weiteren Leiterstreifen 126 der einzelnen ersten bis vierten Statorsektoren 110, 112, 113, 114 auf der Statoreinheit 100 jeweils elektrisch isoliert von den Leiterstreifen 125 und weiteren Leiterstreifen 126 der übrigen ersten bis vierten Statorsektoren 110, 112, 113, 114 ausgebildet sind, können die Leiterstreifen 125 und weiteren Leiterstreifen 126 innerhalb der einzelnen ersten bis vierten Statorsektoren 110, 112, 113, 114 jeweils elektrisch leitend miteinander verbunden sein. Insbesondere können innerhalb der ersten bis vierten Statorsektoren 110, 112, 113, 114 jeweils übereinanderliegende Leiterstreifen 125 der ersten Statorlage 104 und der dritten Statorlage 106 elektrisch leitend miteinander verbunden sein. Beispielsweise können jeweils übereinanderliegende Leiterstreifen 125 der ersten bis vierten Statorsektoren 110, 112, 113, 114 in Reihe geschaltet sein. Ebenso können innerhalb der ersten bis vierten Statorsektoren 110, 112, 113, 114 jeweils übereinanderliegende weitere Leiterstreifen 126 der zweiten Statorlage 105 und der vierten Statorlage 107 elektrisch leitend miteinander verbunden sein. Beispielsweise können jeweils übereinanderliegende weitere Leiterstreifen 126 der ersten bis vierten Statorsektoren 110, 112, 113, 114 in Reihe geschaltet sein.

Alternative, hier nicht dargestellte Ausführungsformen der Statoreinheit 100 können zwischen der zweiten und dritten Statorlage 105, 106 in der vertikalen Richtung 15 untereinander angeordnete weitere Statorlagen umfassen. Dabei kann die Statoreinheit 100 in der vertikalen Richtung 15 jeweils abwechselnd Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen. Bei einer dazu alternativen, ebenfalls nicht dargestellten Ausführungsform kann die Statoreinheit 100 in der vertikalen Richtung 15 jeweils Statorlagen mit im Wesentlichen entlang der ersten Richtung 12 länglich ausgedehnten Leiterstreifen 125 und Statorlagen mit im Wesentlichen entlang der zweiten Richtung 14 länglich ausgedehnten weiteren Leiterstreifen 126 umfassen, wobei die Summe der Statorlagen mit im Wesentlichen entlang der ersten Richtung 12 länglich ausgedehnten Leiterstreifen 125 und die Summe der Statorlagen mit im Wesentlichen entlang der zweiten Richtung 14 länglich ausgedehnten weiteren Leiterstreifen 126 einen gleichen mittleren Abstand zu der Statorfläche 11 aufweisen. Außerdem können bei alternativen, nicht dargestellten Ausführungsformen der Statoreinheit 100 zwischen der ersten und der zweiten Statorlage 104, 105 und/oder zwischen der dritten und der vierten Statorlage 106, 107 weitere Statorlagen mit entlang der ersten Richtung 12 ausgedehnten Leiterstreifen 125 oder mit entlang der zweiten Richtung 14 ausgedehnten weiteren Leiterstreifen 126 angeordnet sein.

Die Leiterstreifen 125, 126 der ersten bis vierten Statorsektoren 110, 112, 113, 114 sind innerhalb der ersten bis vierten Statorlagen 104, 105, 106, 107 jeweils zu Statorsegmenten zusammengefasst.

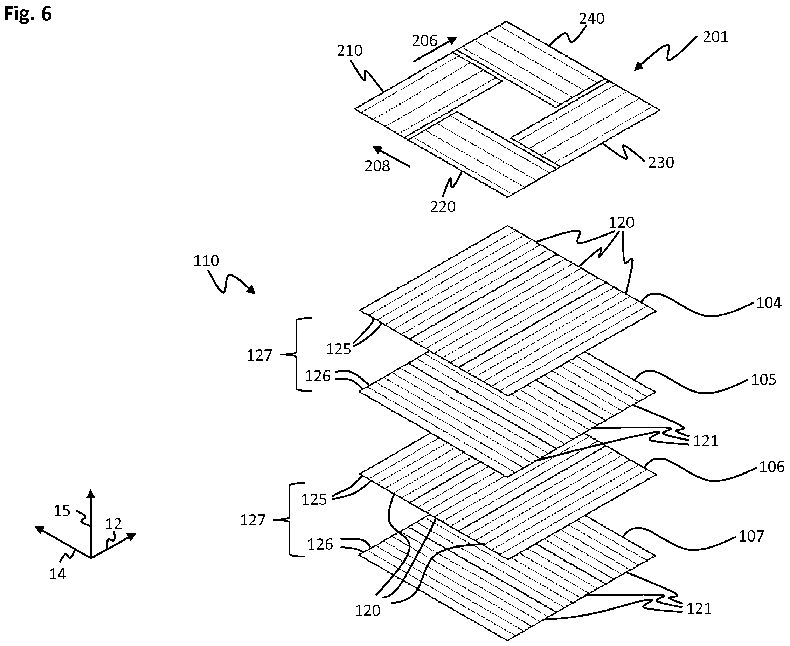

**Fig. 6** zeigt eine schematische Darstellung der ersten bis vierten Statorlagen 104, 105, 106, 107 des ersten Statorsektors 110 mit den einzelnen Statorsegmenten.

Die Leiterstreifen 125 und weiteren Leiterstreifen 126 des ersten Statorsektors 110 sind innerhalb der ersten bis vierten Statorlagen 104, 105, 106, 107 jeweils zu Statorsegmenten 120, 121 zusammengefasst. Der erste Statorsektor 110 umfasst in jeder ersten bis vierten Statorlage 104, 105, 106, 107 jeweils drei nebeneinander und aneinander anschließend angeordnete Statorsegmente 120, 121. Jedes der Statorsegmente 120, 121 umfasst jeweils sechs nebeneinander angeordnete Leiterstreifen 125 oder weitere Leiterstreifen 126. Der erste Statorsektor 110 umfasst in der ersten und dritten Statorlage 104, 106 jeweils drei erste Statorsegmente 120 und in der zweiten und vierten Statorlage 105, 107 jeweils drei zweite Statorsegmente 121. Die ersten Statorsegmente 120 umfassen jeweils sechs nebeneinanderliegende der entlang der zweiten Richtung 14 nebeneinander angeordneten und entlang der ersten Richtung 12 länglich ausgedehnten Leiterstreifen 125. Die zweiten Statorsegmente 121 umfassen jeweils sechs nebeneinanderliegende der entlang der ersten Richtung 12 nebeneinander angeordneten und entlang der zweiten Richtung 14 länglich ausgedehnten weiteren Leiterstreifen 126.

Der erste Statorsektor 110 der Statoreinheit 100 umfasst damit in der ersten Statorlage 104 und in der dritten Statorlage 106 ausschließlich Leiterstreifen 125, die entlang der ersten Richtung 12 länglich ausgedehnt sind, und in der zweiten Statorlage 105 und in der vierten Statorlage 107 ausschließlich weitere Leiterstreifen 126, die entlang der zweiten Richtung 14 länglich ausgedehnt sind.

Die ersten und zweiten Statorsegmente 120, 121 weisen, abgesehen von ihrer Orientierung, identische Abmessungen auf. Insbesondere entsprechen die Abmessungen der ersten Statorsegmente 120 in der ersten Richtung 12 den Abmessungen der zweiten Statorsegmente 121 in der zweiten Richtung 14 und die Abmessungen der ersten Statorsegmente 120 in der zweiten Richtung 14 entsprechen den Abmessungen der zweiten Statorsegmente 121 in der ersten Richtung 12.

Die Statorsegmente 120, 121 sind derart übereinanderliegend angeordnet, dass sich jeweils jedes der ersten Statorsegmente 120 der ersten und dritten Statorlage 104, 106 des ersten Statorsektors 110 in der ersten Richtung 12 über die drei in der ersten Richtung 12 nebeneinander angeordneten zweiten Statorsegmente 121 der zweiten und vierten Statorlage 105, 107 des ersten Statorsektors 110 erstreckt. Außerdem erstrecken sich die zweiten Statorsegmente 121 der zweiten und vierten Statorlage 105, 107 des ersten Statorsektors 110 in der zweiten Richtung 14 über alle in der zweiten Richtung 14 nebeneinander angeordneten ersten Statorsegmente 120 der ersten und dritten Statorlage 104, 106 des ersten Statorsektors 110.

Die Anordnung der Leiterstreifen 125 und weiteren Leiterstreifen 126 in den ersten bis vierten Statorlagen 104, 105, 106, 107 des zweiten Statorsektors 112, des dritten Statorsektors 113 und des vierten Statorsektors 114 entspricht der in Fig. 6 dargestellten Anordnung der Leiterstreifen 125 und weiteren Leiterstreifen 126 in den ersten bis vierten Statorlagen 104, 105, 106, 107 des ersten Statorsektors 110.

Im Betrieb des Planarantriebssystems 1 kann der Mover 200 derart über der Statoreinheit 100 ausgerichtet sein, dass die erste Läuferrichtung 206 entlang der ersten Richtung 12 und die zweite Läuferrichtung 208 entlang der zweiten Richtung 14 orientiert ist. Die erste Magneteinheit 210 und die dritte Magneteinheit 230 können im Betrieb mit dem durch die Leiterstreifen 125 der ersten Statorsegmente 120 erzeugten Magnetfeld wechselwirken, um den Mover 200 entlang der zweiten Richtung 14 anzutreiben. Die zweite Magneteinheit 220 und die vierte Magneteinheit 240 können im Betrieb mit dem durch die weiteren Leiterstreifen 126 der zweiten Statorsegmente 121 erzeugten Magnetfeld wechselwirken, um den Mover 200 entlang der ersten Richtung 12 anzutreiben.

Alternativ kann der Mover 200, anders als in Fig. 6 dargestellt, auch derart ausgerichtet sein, dass die erste Läuferrichtung 206 entlang der zweiten Richtung 14 und die zweite Läuferrichtung 208 entlang der ersten Richtung 12 orientiert ist. In diesem Fall wirken die erste und die dritte Magneteinheit 210, 230 mit dem Magnetfeld der zweiten Statorsegmente 121 zum Antreiben des Movers 200 in die erste Richtung 12 und die zweite und die vierte Magneteinheit 220, 240 mit dem Magnetfeld der ersten Statorsegmente 120 zum Antreiben des Movers 200 in die zweite Richtung 14 zusammen.

Die Leiterstreifen 125 oder weiteren Leiterstreifen 126 der einzelnen ersten oder zweiten Statorsegmente 120, 121 sind jeweils unabhängig von den Leiterstreifen 125 oder weiteren Leiterstreifen 126 der übrigen ersten oder zweiten Statorsegmente 120, 121 mit den Antriebsströmen bestrombar. Insbesondere hängen die Antriebsströme in einem der ersten oder zweiten Statorsegmente 120, 121 nicht zwingend von Antriebsströmen in einem der anderen ersten oder zweiten Statorsegmente 120, 121 ab. Außerdem können die Leiterstreifen 125 oder weiteren Leiterstreifen 126 eines der ersten oder zweiten Statorsegmente 120, 121 mit Antriebsströmen beaufschlagt werden, während die Leiterstreifen 125 oder weiteren Leiterstreifen 126 eines anderen, beispielsweise eines benachbarten, ersten oder zweiten Statorsegments 120, 121 stromlos sind. Die Leiterstreifen 125 oder weiteren Leiterstreifen 126 der einzelnen ersten oder zweiten Statorsegmente 120, 121 sind auf der Statoreinheit 100 elektrisch isoliert von den Leiterstreifen 125 oder weiteren Leiterstreifen 126 der übrigen ersten oder zweiten Statorsegmente 120, 121 ausgeführt. Die Leiterstreifen 125 oder weiteren Leiterstreifen 126 unterschiedlicher erster oder zweiter Statorsegmente 120, 121 können beispielsweise aus jeweils separaten Leistungsmodulen oder aus separaten Stromerzeugungseinheiten bzw. Endstufen eines Leistungsmoduls des Statormoduls 10 mit den Antriebsströmen beaufschlagt werden.

Die Leiterstreifen 125 oder weiteren Leiterstreifen 126 in den einzelnen ersten bis vierten Statorsektoren 110, 112, 113, 114 können jeweils zu Mehrphasensystemen mit einem gemeinsamen Sternpunkt zusammengeschaltet sein. Der Sternpunkt kann auf der Statoreinheit 100 ausgebildet sein. Insbesondere können die Leiterstreifen 125 oder weiteren Leiterstreifen 126 zu Dreiphasensystemen mit einem gemeinsamen Sternpunkt zusammengeschaltet sein. Die Dreiphasensysteme können jeweils sechs benachbarte Leiterstreifen 125 oder sechs benachbarte weitere Leiterstreifen 126 umfassen. Die Anzahl benachbarter Leiterstreifen 125 oder weiteren Leiterstreifen 126 in einem der Dreiphasensysteme kann auch jeweils drei, zwölf oder ein anderes Vielfaches von drei betragen.

Die Mehrphasensysteme können auf der Statoreinheit 100 derart kontaktierbar sein, dass jedes der Mehrphasensysteme unabhängig von den übrigen Mehrphasensystemen mit einem Antriebsstrom beaufschlagbar ist. Alternativ können auch jeweils zwei oder mehr der Mehrphasensysteme auf der Statoreinheit 100 derart miteinander verbunden sein, dass die verbundenen Mehrphasensysteme jeweils zusammen mit einem gemeinsamen Antriebsstrom beaufschlagt werden. Beispielsweise können die verbundenen Mehrphasensysteme auf der Statoreinheit 100 seriell oder parallel geschaltet sein.

Bei einer Verschaltung der Leiterstreifen 125 oder weiteren Leiterstreifen 126 zu Mehrphasensystemen werden zur Bestromung der Leiterstreifen 125 oder weiteren Leiterstreifen 126 weniger Kontakte benötigt als bei einer separaten Bestromung der einzelnen Leiterstreifen 125 oder weiteren Leiterstreifen 126. Dadurch wird der für die Bestromung der Leiterstreifen 125 oder weiteren Leiterstreifen 126 benötigte Hardwareaufwand, insbesondere die Anzahl der für die Bestromung benötigten Stromerzeugungseinheiten, reduziert.

Die ersten bis vierten Statorsektoren 110, 112, 113, 114 können, wie in den Fig. 4 und 5 dargestellt, in jeder ersten bis vierten Statorlage 104, 105, 106, 107 jeweils achtzehn Leiterstreifen 125 oder weitere Leiterstreifen 126 umfassen. Jeweils sechs benachbarte Leiterstreifen 125 oder weitere Leiterstreifen 126 können zu einem Dreiphasensystem verschaltet sein und die ersten bis vierten Statorsektoren 110, 112, 113, 114 können jeweils drei in der ersten Richtung 12 nebeneinanderliegende Dreiphasensysteme und jeweils drei in der zweiten Richtung 14 nebeneinanderliegende Dreiphasensysteme umfassen. Dabei können Leiterstreifen 125 oder weitere Leiterstreifen 126, die im Wesentlichen in der gleichen Richtung 12, 14 ausgedehnt sind und in den ersten bis vierten Statorlagen 104, 105, 106, 107 übereinanderliegen, in Serie zu einem gemeinsamen Dreiphasensystem verschaltet sein. Die Leiterstreifen 125 oder weiteren Leiterstreifen 126 können dabei derart verschaltet sein, dass in der vertikalen Richtung 15 übereinanderliegende Leiterstreifen 125 oder weitere Leiterstreifen 126 jeweils mit dem gleichen Antriebsstrom beaufschlagt werden. Die Dreiphasensysteme weisen damit drei Phasen auf, die aus in den ersten bis vierten Statorlagen 104, 105, 106, 107 übereinanderliegenden Leiterstreifen 125 oder weiteren Leiterstreifen 126 zusammengeschaltet sind.

Beispielsweise können in den einzelnen ersten bis vierten Statorlagen 104, 105, 106, 107 jeweils alle übereinanderliegenden und parallel ausgerichteten Leiterstreifen 125 oder weiteren Leiterstreifen 126 in Serie geschaltet sein. Insbesondere können die Leiterstreifen 125 von in der ersten Statorlage 104 und in der dritten Statorlage 106 übereinanderliegenden Dreiphasensystemen, sowie die weiteren Leiterstreifen 126 von in der zweiten Statorlage 105 und in der vierten Statorlage 107 übereinanderliegenden Dreiphasensystemen jeweils seriell zu einem gemeinsamen Dreiphasensystem verschaltet sein. Dabei können jeweils alle in der vertikalen Richtung 15 übereinanderliegenden und parallel orientierten Leiterstreifen 125 oder weiteren Leiterstreifen 126 der ersten und dritten Statorlage 104, 106 und der zweiten und vierten Statorlage 105, 107 in Serie geschaltet sein.

Insbesondere sind bei der Statoreinheit 100 innerhalb der einzelnen Statorsegmente 120 die entlang der ersten Richtung 12 länglich ausgedehnten Leiterstreifen 125 jeweils zu Mehrphasensystemen mit einem gemeinsamen Sternpunkt verschaltet. Dabei sind die einzelnen Mehrphasensysteme verschiedener Statorsegmente 120 jeweils unabhängig voneinander bestrombar. Ebenso sind alle weiteren Leiterstreifen 126 der einzelnen weiteren Statorsegmente 121 jeweils zu weiteren Mehrphasensystemen verschaltet. Die einzelnen weiteren Mehrphasensysteme der weiteren Statorsegmente 121 sind jeweils unabhängig voneinander und unabhängig von den Mehrphasensystemen der Statorsegmente 120 bestrombar. Insbesondere sind die Leiterstreifen 125 der Statorsegmente 120 und die weiteren Leiterstreifen 126 der weiteren Statorsegmente 121 jeweils zu Dreiphasensystemen verschaltet. Die Leiterstreifen 125 und die weiteren Leiterstreifen 126 können jeweils mit einem dreiphasigen Antriebsstrom beaufschlagt werden. Die Antriebsströme umfassen eine erste Phase U, eine zweite Phase V und eine dritte Phase W, die untereinander jeweils einen Phasenversatz von 120° aufweisen.

Die Leiterstreifen 125 sind räumlich in der zweiten Richtung 14 um jeweils ein Drittel der wirksamen Wellenlänge der mit den Leiterstreifen 125 wechselwirkenden Antriebsmagnete 211 der ersten und dritten Magneteinheit 210, 230 versetzt angeordnet. Die weiteren Leiterstreifen 126 sind räumlich in der ersten Richtung 12 um jeweils ein Drittel der wirksamen weiteren Wellenlänge der mit den weiteren Leiterstreifen 126 wechselwirkenden weiteren Antriebsmagnete 221 der zweiten und vierten Magneteinheit 220, 240 versetzt angeordnet.

Die Leiterstreifen 125 und die weiteren Leiterstreifen 126 stellen elektrische Magnetfelderzeuger 127 dar. Die Magnetfelderzeuger 127 können auch andere Materialien, Funktionsprinzipien und/oder Formen aufweisen.

Der Mover stellt das bewegbare Element, somit den Läufer der Vorrichtung dar und weist Mittel zur Erzeugung eines Magnetfeldes, insbesondere Magneten oder Permanentmagneten auf, die als zweite Magnetfelderzeuger bezeichnet werden. Das Magnetfeld des Movers sorgt mit dem durch die Magnetfelderzeuger 127 erzeugten, veränderbaren Magnetfeld der Statoreinheit dafür, dass der Mover über die Statoreinheit bewegt wird, so dass insbesondere ein Luftspalt zwischen der Statoreinheit und dem Mover ausgebildet wird.

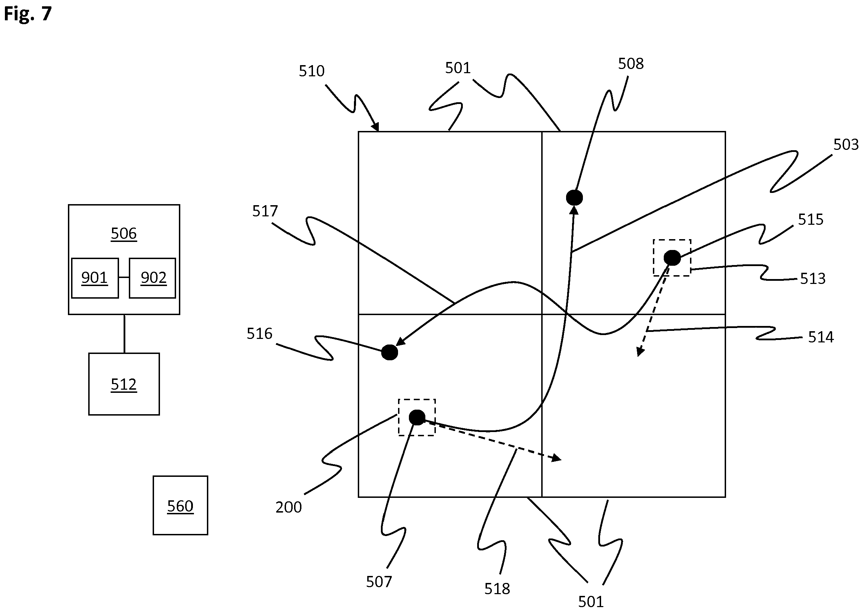

**Fig. 7** zeigt in einer schematischen Darstellung einen Ausschnitt einer Antriebsfläche 510 in einer Draufsicht. Die Antriebsfläche 510 kann durch eine Vielzahl von Statormodulen 10 des in den Figuren 1 bis 6 beschriebenen Planarantriebssystems ausgebildet sein. Es können jedoch auch andere Ausführungsformen von Planarantriebssystemen verwendet werden, die mithilfe von Magnetfeldern einen Mover 200 auf einer Antriebsfläche 510 bewegen. Es sind vier Sektoren 501 dargestellt, wobei jeweils ein Sektor 501 durch ein Statormodul 10 der Figuren 1 bis 6 gebildet sein kann. Die vier Sektoren 501 weisen in dem Ausführungsbeispiel die Form von Quadraten auf. Abhängig von der gewählten Ausführung können die Sektoren 501 auch andere Formen wie z.B. Rechtecke oder Dreiecke usw. aufweisen. Ein Sektor 501 kann z.B. eine Größe im Bereich von 150mm x 150mm bis zu 240mm x 240mm aufweisen. Abhängig von der gewählten Ausführungsform kann ein Sektor 501 auch andere Größen aufweisen. Zudem können die Sektoren 501 auch unterschiedliche Größen aufweisen.

Zudem sind ein erster Mover 200 und ein zweiter Mover 513 auf der Antriebsfläche 510 angeordnet. Der erste Mover 200 ist beispielsweise wie in den Figuren 1 bis 3 beschrieben ausgebildet. Der erste Mover 200 kann eine quadratische, runde oder rechteckige Form oder auch andere Formen aufweisen. Der erste Mover 200 kann beispielsweise eine Größe im Bereich von 100mm x 100mm bis zu 200mm x 200mm aufweisen. Der erste Mover 200 kann eine Dicke im Bereich von 8mm bis 20mm aufweisen. Die Antriebsfläche 510, d.h. die Sektoren 501, und der erste Mover 200 können ausgebildet sein, um den ersten Mover 200 mit einer Geschwindigkeit von z.B. 1m/s bis 6m/s zu bewegen. Die Antriebsfläche 510, d.h. die Sektoren 501, und der erste Mover 200 können ausgebildet sein, um den ersten Mover 200 mit einer Beschleunigung von bis zu 30m/s² oder mehr zu bewegen. Zudem kann der erste Mover 200 ausgebildet sein, um eine Last von bis zu 1,5kg und mehr zu tragen. Zudem kann der erste Mover 200 ausgebildet sein, um mit einem Abstand zur Antriebsfläche 510 von bis zu 6mm oder mehr bewegt zu werden. Der zweite Mover 513 kann identisch zum ersten Mover 200 ausgebildet sein.

Die Steuereinheit 506 ist mit einem Datenspeicher 512 verbunden und steht direkt oder indirekt mit Magnetfelderzeugern 127 der Sektoren 501 in Verbindung. Zudem ist die Steuereinheit 506 mit Sensoren 560 der Antriebsfläche 510 verbunden, die beispielsweise eine aktuelle Position des ersten und zweiten Movers 200, 513, eine aktuelle Geschwindigkeit des ersten und zweiten Movers 200, 513, eine aktuelle Beschleunigung des ersten und zweiten Movers 200, 513, eine aktuelle Bewegungsrichtung des ersten oder zweiten Movers 200, 513 und/oder einen aktuellen Ruck des ersten oder zweiten Movers 200, 513 erfassen und an die Steuereinheit 506 weiterleiten. Zudem kann die Steuereinheit 506 in einem Datenspeicher 512 Informationen über geplante beziehungsweise berechnete Positionen des ersten und zweiten Movers 200, 513, berechnete Werte für die Geschwindigkeiten des ersten und zweiten Movers 200, 513, berechnete Werte für die Beschleunigungen des ersten und zweiten Movers 200, 513, berechnete Werte für Bewegungsrichtungen des ersten und zweiten Movers 200, 513 und/oder berechnete Werte für den Ruck des ersten und zweiten Movers 200, 513 abgespeichert sein.

Der erste Mover 200 soll auf einem ersten Fahrweg 503 von einem ersten Startpunkt 507 zu einem ersten Zielpunkt 508 bewegt werden. Der erste Fahrweg 503 weist einen ersten Pfad auf und eine Information darüber auf, zu welcher Zeit sich der erste Mover 200 an welcher Position des ersten Pfades befindet. Für eine einfache Darstellung des ersten Fahrweges 503 ist nur ein Pfeil für den ersten Pfad dargestellt. Zudem ist für den ersten Mover 200 eine aktuelle erste Bewegungsrichtung 518 als gestrichelter Pfeil dargestellt.

Der zweite Mover 513 soll auf einem zweiten Fahrweg 517 von einem zweiten Startpunkt 515 zu einem zweiten Zielpunkt 516 bewegt werden. Der zweite Fahrweg 517 weist einen zweiten Pfad und eine Information darüber auf, zu welcher Zeit sich der zweite Mover 513 an welcher Position des zweiten Pfades befindet. Für eine einfache Darstellung des zweiten Fahrweges 517 ist nur ein Pfeil für den zweiten Pfad dargestellt. Zudem ist für den zweiten Mover 513 eine aktuelle zweite Bewegungsrichtung 514 als gestrichelter Pfeil dargestellt.

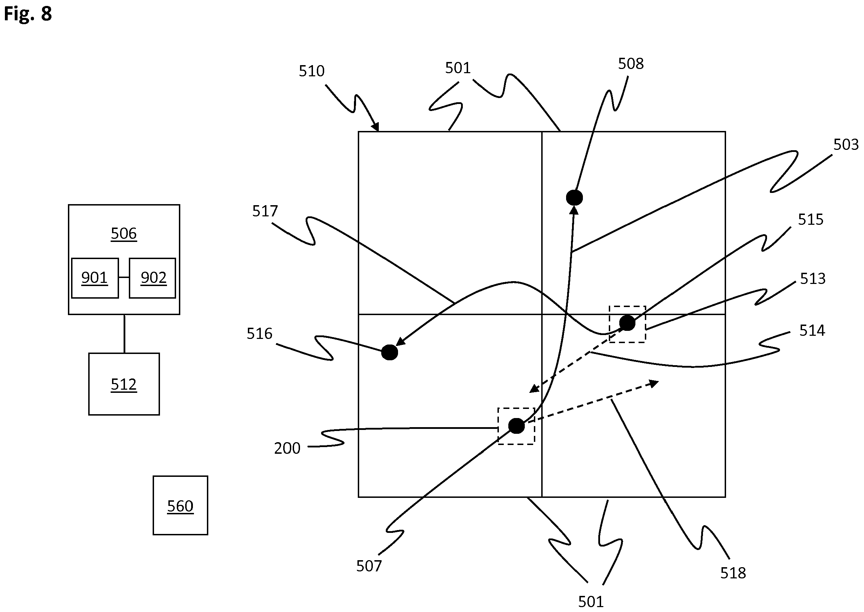

**Fig. 8** zeigt die gleiche Situation wie in Fig. 7 zu einem späteren Zeitpunkt. Der erste Mover 200 wurde ein Stück entlang des ersten Fahrwegs 503 bewegt. Aufgrund der geänderten Position des ersten Movers 200 und des zurückgelegten ersten Fahrwegs 503 hat sich entsprechend auch die aktuelle erste Bewegungsrichtung 518 des ersten Movers 200 geändert. Der erste Startpunkt 507 entspricht stets der aktuellen Position des ersten Movers 200, da der erste Startpunkt 507 bei der im Folgenden beschriebenen ersten Wegplanung des ersten Movers 200 berücksichtigt wird. Der zweite Mover 513 wurde ebenfalls ein Stück entlang des zweiten Fahrwegs 517 bewegt. Aufgrund der geänderten Position des zweiten Movers 513 und des zurückgelegten zweiten Fahrwegs 517 hat sich entsprechend auch die aktuelle zweite Bewegungsrichtung 514 des zweiten Movers 513 geändert. Hier kreuzt die zweite Bewegungsrichtung 514 des zweiten Movers 513 den ersten Fahrweg 503 des ersten Movers 200. Der zweite Startpunkt 515 entspricht stets der aktuellen Position des zweiten Movers 513, da der zweite Startpunkt 515 bei der im Folgenden beschriebenen zweiten Wegplanung des zweiten Movers 513 berücksichtigt wird.

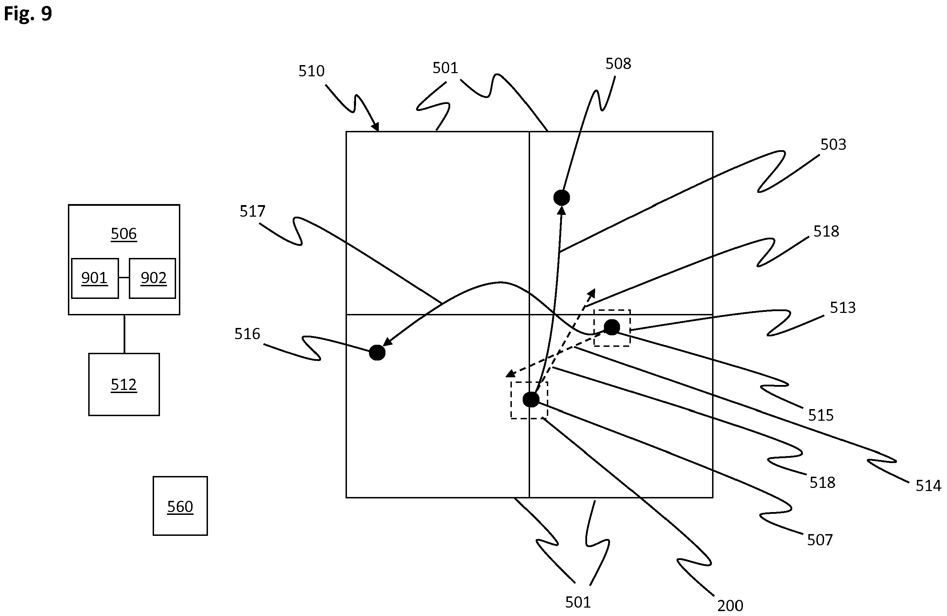

**Fig. 9** zeigt die gleiche Situation wie in Fig. 7 zu einem noch späteren Zeitpunkt als wie in Fig. 8 dargestellt. Der erste Mover 200 wurde ein weiteres Stück entlang des ersten Fahrwegs 503 bewegt. Aufgrund der nochmals geänderten Position des ersten Movers 200 und des weiter zurückgelegten ersten Fahrwegs 503 hat sich entsprechend auch die aktuelle erste Bewegungsrichtung 518 des ersten Movers 200 nochmals geändert. Hier kreuzt jetzt auch die aktuelle Bewegungsrichtung 518 des ersten Movers 200 den zweiten Fahrweg 517 des zweiten Movers 513. Der zweite Mover 513 wurde ebenfalls ein weiteres Stück entlang des zweiten Fahrwegs 517 bewegt. Aufgrund der nochmals geänderten Position des zweiten Movers 513 und des weiter zurückgelegten zweiten Fahrwegs 517 hat sich entsprechend auch die aktuelle zweite Bewegungsrichtung 514 des zweiten Movers 513 nochmals geändert. Wie bereits in der Darstellung gemäß Fig. 8 kreuzt auch hier die zweite Bewegungsrichtung 514 des zweiten Movers 513 den ersten Fahrweg 503 des ersten Movers 200.

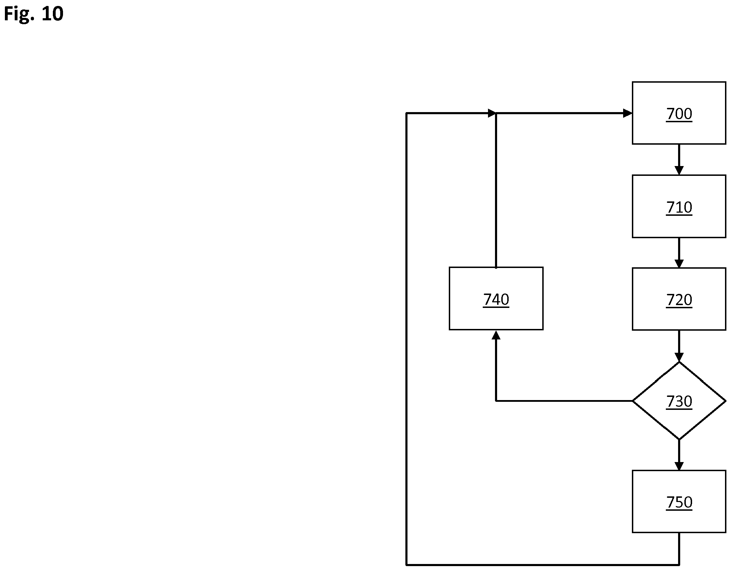

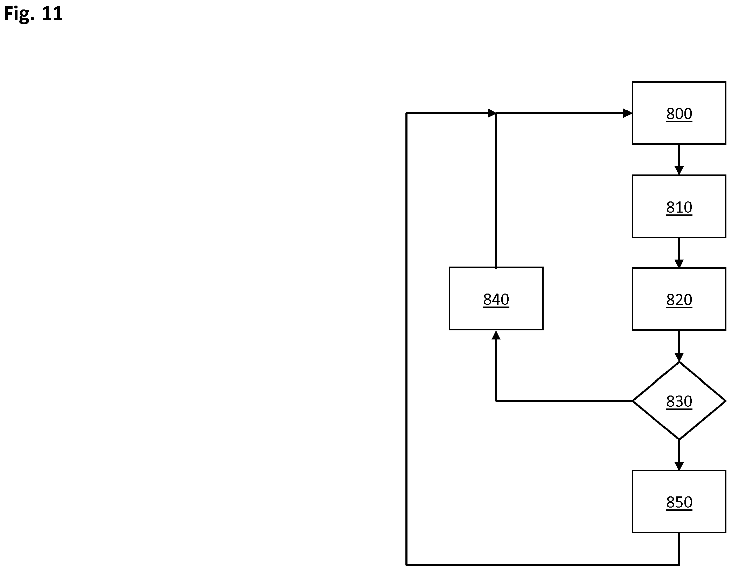

Wie aus Fig. 7 bis Fig. 9 ersichtlich ist, würden sich der seitens der Steuereinheit 506 ermittelte erste Fahrweg 503 des ersten Movers 200 und der seitens der Steuereinheit 506 ermittelte zweite Fahrweg 517 des zweiten Movers 513 kreuzen, so dass es zu einer Kollision zwischen dem ersten Mover 200 und dem zweiten Mover 513 kommen könnte, die es jedoch zu verhindern gilt. Da die Ermittlung der Fahrwege, also des ersten Fahrwegs 503 für den ersten Mover 200 und des zweiten Fahrwegs 517 des zweiten Movers 513 sehr rechenintensiv ist und eine sehr große Anzahl an Positionswerten in Kombination mit Zeitwerten für jeden der Fahrwege erzeugt werden, würde ein Austausch dieser Informationen zum Abgleich der Fahrwege und somit zur Kollisionsvermeidung einen großvolumigen Datenaustausch bedingen und die Ermittlung des ersten Fahrweges 503 und/oder des zweiten Fahrwegs 517 sehr verzögern. Durch das im Folgenden im Zusammenhang mit den Fig. 10 und 11 beschriebene Verfahren kann die benötigte Rechenkapazität und Datenaustauschmenge deutlich reduziert werden.

Anhand des Programmablaufes der **Fig. 10** wird ein Verfahren für eine erste Wegplanung für den ersten Mover 200 beschrieben, wobei an entsprechender Stelle auf die entsprechenden Situationen gemäß der Darstellungen von Fig. 7, 8 oder 9 verwiesen wird.

Beim ersten Programmpunkt 700, der der ersten Situation gemäß Fig. 7 entspricht, ist der Steuereinheit 506 die aktuelle Position des ersten Movers 200 auf der Antriebsfläche 510 bekannt. Die aktuelle Position des ersten Movers 200 stellt somit einen ersten Startpunkt 507 für die erste Wegplanung dar. Zudem soll der erste Mover 200 vom ersten Startpunkt 507 zu einem vorgegebenen ersten Zielpunkt 508 bewegt werden. Der erste Zielpunkt 508 ist z.B. im Datenspeicher 512 abgelegt. Für die erste Wegplanung weist die Steuereinheit 506 entsprechende Berechnungsprogramme auf, die nach vorgegebenen Randbedingungen eine erste Wegplanung für den ersten Mover 200 vom ersten Startpunkt 507 zum ersten Zielpunkt 508 ausführen und einen ersten Fahrweg 503 für den ersten Mover 200 ermitteln.

Der erste Fahrweg 503 umfasst einen ersten Pfad und eine Festlegung, zu welchem Zeitpunkt sich der erste Mover 200 an welchem Punkt des ersten Pfades befindet. Anhand des ersten Fahrweges 503 wird eine Dynamikplanung durchgeführt, die festlegt, mit welcher Geschwindigkeit und mit welcher Beschleunigung der erste Mover 200 entlang des ersten Pfades bewegt werden muss, um den ersten Fahrweg 503 einzuhalten. Die Steuereinheit 506 ist ausgebildet, um basierend auf der Dynamikplanung und der ersten Wegplanung die Magnetfelderzeuger 127 der vier Sektoren 501 in der Weise anzusteuern, dass der erste Mover 200 mithilfe der Magnetfelder auf dem gewünschten ersten Fahrweg 503 von einem ersten Startpunkt 507 zu einem ersten Zielpunkt 508 bewegt wird.

Der erste Fahrweg 503 wird von der Steuereinheit 506 in einem folgenden zweiten Programmpunkt 710 ermittelt. Der erste Fahrweg 503 ist in Fig. 7 bis 9 schematisch in Form eines Pfeiles dargestellt, der vom ersten Startpunkt 507 zum ersten Zielpunkt 508 führt. Abhängig von der gewählten Ausführungsform kann bereits der gesamte erste Fahrweg 503 vom ersten Startpunkt 507 zum ersten Zielpunkt 508 ermittelt werden oder es wird ein Teilabschnitt des ersten Fahrweges 503 für einen vorgegebenen Zeithorizont oder für einen vorgegebenen Weghorizont, d.h. eine Entfernung von der aktuellen Position des ersten Movers 200 ermittelt.

Bei einem folgenden dritten Programmpunkt 720 wird ein geschätzter zweiter Fahrweg für den zweiten Mover 513 insbesondere für einen vorgegebenen Zeithorizont oder Weghorizont ermittelt. In einer einfachen Ausführung des Verfahrens wird der geschätzte zweite Fahrweg beispielsweise aufgrund der aktuellen zweiten Bewegungsrichtung 514 des zweiten Movers 513 ermittelt. Die zweite Bewegungsrichtung 514 ist in Fig. 7 bis 9 schematisch als gestrichelter Pfeil dargestellt, der von einer Mitte des zweiten Movers 513 ausgeht. Abhängig von der gewählten Ausführungsform kann zusätzlich zur zweiten Bewegungsrichtung 514 die aktuelle zweite Geschwindigkeit des zweiten Movers 513 für eine Schätzung des zweiten Fahrweges berücksichtigt werden. Zudem kann zusätzlich zur zweiten Geschwindigkeit des zweiten Movers 513 die zweite Beschleunigung des zweiten Movers 513 bei der Schätzung des zweiten Fahrweges berücksichtigt werden.

Bei der Ermittlung des ersten Fahrweges 503 wird von der Steuereinheit 506 der geschätzte zweite Fahrweg des zweiten Movers 513 berücksichtigt. Bei einem folgenden vierten Programmpunkt 730 überprüft die Steuereinheit 506, ob die Gefahr einer Kollision zwischen dem ersten Mover 200 und dem zweiten Mover 513 aufgrund des ermittelten ersten Fahrweges 503 des ersten Movers 200 und aufgrund der Berücksichtigung des geschätzten zweiten Fahrweges des zweiten Movers 513 vorliegt. Dazu überprüft die Steuereinheit, ob für einen vorgegebenen Zeithorizont sich der erste Fahrweg 503 und der geschätzte zweite Fahrweg kreuzen. Bei der Prüfung der Kreuzung kann auch die Ausdehnungen der ersten und zweiten Mover 200, 513 berücksichtigt werden. Bei einem einfachen Fall wird der geschätzte zweite Fahrweg des zweiten Movers 513 als eine gerade Bewegung des zweiten Movers 513 in der zweiten Bewegungsrichtung 514 angesehen. Abhängig von der gewählten Ausführungsform kann zusätzlich zur zweiten Bewegungsrichtung 514 die aktuelle zweite Geschwindigkeit des zweiten Movers 513 für eine Schätzung des zweiten Fahrweges berücksichtigt werden. Bei diesem Fall wird der geschätzte zweite Fahrweg anhand der zweiten Bewegungsrichtung 514 und der aktuellen zweiten Geschwindigkeit des zweiten Movers 513 geschätzt. In einer weiteren Ausführung wird zusätzlich zur zweiten Geschwindigkeit des zweiten Movers 513 auch die aktuelle zweite Beschleunigung des zweiten Movers 513 bei der Schätzung des zweiten Fahrweges berücksichtigt und der geschätzte zweite Fahrweg anhand der aktuellen zweiten Bewegungsrichtung 514, der aktuellen zweiten Geschwindigkeit und anhand der aktuellen zweiten Beschleunigung berechnet.

Ergibt die Überprüfung beim vierten Programmpunkt 730, dass aufgrund des ermittelten ersten Fahrweges 503 unter Berücksichtigung des geschätzten zweiten Fahrwegs keine Kollision des ersten Movers 200 mit dem zweiten Mover 513 für einen vorgebbaren Zeithorizont auftreten wird, so wird die Gefahr einer Kollision verneint und es wird zum fünften Programmpunkt 740 verzweigt. Dies ist zu dem Zeitpunkt der gemäß der Situation in Fig. 7 dargestellt ist, der Fall, da hier die zweite Bewegungsrichtung 514 des zweiten Movers 513 nicht den ersten Fahrweg 503 des ersten Movers 200 kreuzt.

Beim fünften Programmpunkt 740 steuert die Steuereinheit 506 die Magnetfelderzeuger 127 der Sektoren 501 in der Weise an, dass der erste Mover 200 auf dem ersten Fahrweg 503 über die Antriebsfläche 510 in Richtung auf den ersten Zielpunkt 508 weiterbewegt wird.

Anschließend wird zum ersten Programmpunkt 700 verzweigt und das Programm startet erneut beim ersten Programmpunkt 700.

Ergibt die Überprüfung beim vierten Programmpunkt 730, dass die Gefahr einer Kollision besteht, so wird in einem folgenden sechsten Programmpunkt 750 der erste Fahrweg 503 in der Weise verändert, dass eine Kollision vermieden wird. Dieser Fall ist in Fig. 8 und in Fig. 9 dargestellt. Eine mögliche Kollision des ersten Movers 200 mit dem zweiten Mover 513 würde hier erkannt werden, weil die aktuelle zweite Bewegungsrichtung 514 den ersten Fahrweg 503 des ersten Movers 200 kreuzt. Bei der Veränderung des ersten Fahrwegs 503 gemäß dem sechsten Programmpunkt 750 können die Bewegungsrichtung und/oder die Geschwindigkeit und/oder die Beschleunigung des ersten Movers 200 in der Weise verändert werden, dass eine Kollision mit dem zweiten Mover 513 gemäß dem geschätzten zweiten Fahrweg vermieden wird. Abhängig von der gewählten Ausführungsform kann anstelle oder zusätzlich zu der Änderung des ersten Fahrweges 503 auch der zweite Fahrweg 517 des zweiten Movers 513 in der Weise geändert werden, dass eine Kollision zwischen dem ersten Mover 200 und dem zweiten Mover 513 vermieden wird. Für die Vermeidung der Kollision der zwei Mover 200, 513 können entsprechende Strategien im Datenspeicher 512 abgelegt sein. Beispielsweise kann eine Richtungsänderung oder eine Geschwindigkeitsänderung des ersten Movers 200 und/oder des zweiten Movers 513 bevorzugt werden.

Nach dem sechsten Programmpunkt 750 wird zum ersten Programmpunkt 700 zurückverzweigt und das Programm wird erneut durchlaufen.

Da sich jedoch der zweite Mover 513 aufgrund seiner eigenen Bewegung stets in eine andere Richtung als der geschätzten zweiten Richtung bewegen kann, muss der beschriebene Programmdurchlauf in vorgegebenen Zeitabständen wiederholt werden. Somit wird das Programm zyklisch in vorgegebenen Zeitabständen wiederholt durchlaufen. Der Zeitzyklus, in dem das Programm zyklisch durchlaufen wird, kann in einem Bereich zwischen 100µs bis 400µs oder auch in einem Bereich von bis zu 2ms oder mehr liegen.

Zudem kann abhängig von der gewählten Ausführungsform die Steuereinheit 506 auch eine zweite Wegplanung für den zweiten Mover 513 ausführen. Die zweite Wegplanung beinhaltet eine Planung eines zweiten Pfades und eine Dynamikplanung, die festlegt, mit welcher Geschwindigkeit und mit welcher Beschleunigung der zweite Mover 513 entlang des zweiten Pfades bewegt wird. Aus dem zweiten Pfad und der Geschwindigkeit und evtl. der Beschleunigung ergibt sich die zeitliche Position des zweiten Movers 513 auf dem zweiten Pfad, die als zweiter Fahrweg 517 bezeichnet wird. Die Steuereinheit 506 ist ausgebildet, um basierend auf der Dynamikplanung und der Pfadplanung die Magnetfelderzeuger 127 der Sektoren 501 in der Weise anzusteuern, dass der zweite Mover 513 mithilfe der Magnetfelder auf dem gewünschten zweiten Fahrweg 517 von einem zweiten Startpunkt 514 zu einem zweiten Zielpunkt 516 bewegt wird.

Somit kann in analoger Weise, wie in Fig. 11 dargestellt ist, die Planung des zweiten Fahrweges 517 des zweiten Movers 513 unter Berücksichtigung eines geschätzten ersten Fahrweges des ersten Movers 200 zur Vermeidung einer Kollision des zweiten Movers 513 mit dem ersten Mover 200 durchgeführt werden. Dabei übernimmt die Steuereinheit 506 die zweite Wegplanung des zweiten Movers 513 von einem zweiten Startpunkt 515 bis zu einem zweiten Zielpunkt 516.

Anhand des Programmablaufes der Fig. 11 wird ein Verfahren für eine zweite Wegplanung für den zweiten Mover 513 beschrieben, die von der Steuereinheit 506 ausgeführt wird, wobei an entsprechender Stelle auf die entsprechenden Situationen gemäß der Darstellungen von Fig. 7, 8 oder 9 verwiesen wird.

Beim ersten weiteren Programmpunkt 800, der der ersten Situation gemäß Fig. 7 entspricht, ist der Steuereinheit 506 die aktuelle Position des zweiten Movers 513 auf der Antriebsfläche 510 bekannt. Die aktuelle Position des zweiten Movers 513 stellt somit einen zweiten Startpunkt 515 für die zweite Wegplanung dar. Zudem soll der zweite Mover 513 vom zweiten Startpunkt 515 zu einem vorgegebenen zweiten Zielpunkt 516 bewegt werden. Der zweite Zielpunkt 516 ist z.B. im Datenspeicher 512 abgelegt. Für die zweite Wegplanung weist die Steuereinheit 506 entsprechende Berechnungsprogramme auf, die nach vorgegebenen Randbedingungen eine zweite Wegplanung für den zweiten Mover 513 vom zweiten Startpunkt 515 zum zweiten Zielpunkt 516 ausführen und einen zweiten Fahrweg 517 für den zweiten Mover 513 ermitteln.

Der zweite Fahrweg 517 wird von der Steuereinheit 506 in einem folgenden weiteren zweiten Programmpunkt 810 ermittelt. Der zweite Fahrweg 517 ist in Fig. 7 bis 9 schematisch in Form eines Pfeiles dargestellt, der vom zweiten Startpunkt 515 zum zweiten Zielpunkt 516 führt. Abhängig von der gewählten Ausführungsform kann bereits der gesamte zweite Fahrweg 517 vom zweiten Startpunkt 515 zum zweiten Zielpunkt 516 ermittelt werden oder es wird ein Teilabschnitt des zweiten Fahrweges 517 für einen vorgegebenen Zeithorizont oder für einen vorgegebenen Weghorizont, d.h. eine Entfernung von der aktuellen Position des zweiten Movers 513 ermittelt.

Bei einem folgenden weiteren dritten Programmpunkt 820 wird ein geschätzter erster Fahrweg für den ersten Mover 200 insbesondere für einen vorgegebenen Zeithorizont oder Weghorizont ermittelt. In einer einfachen Ausführung des Verfahrens wird der geschätzte erste Fahrweg beispielsweise aufgrund der aktuellen ersten Bewegungsrichtung 518 des ersten Movers 200 ermittelt. Die erste Bewegungsrichtung 518 ist in Fig. 7 bis 9 schematisch als gestrichelter Pfeil dargestellt, der von einer Mitte des ersten Movers 200 ausgeht. Abhängig von der gewählten Ausführungsform kann zusätzlich zur ersten Bewegungsrichtung 518 die aktuelle erste Geschwindigkeit des ersten Movers 200 für eine Schätzung des ersten Fahrweges berücksichtigt werden. Zudem kann zusätzlich zur ersten Geschwindigkeit des ersten Movers 200 die erste Beschleunigung des ersten Movers 200 bei der Schätzung des ersten Fahrweges berücksichtigt werden.

Bei der Ermittlung des zweiten Fahrweges 517 wird von der Steuereinheit 506 der geschätzte erste Fahrweg des ersten Movers 200 berücksichtigt. Bei einem folgenden weiteren vierten Programmpunkt 830 überprüft die Steuereinheit 506, ob die Gefahr einer Kollision zwischen dem zweiten Mover 513 und dem ersten Mover 200 aufgrund des ermittelten zweiten Fahrweges 517 und aufgrund der Berücksichtigung des geschätzten ersten Fahrweges des ersten Movers 200 vorliegt. Dazu überprüft die Steuereinheit 506, ob für einen vorgegebenen Zeithorizont sich der zweite Fahrweg 517 und der geschätzte erste Fahrweg kreuzen. Bei der Prüfung der Kreuzung kann auch die Ausdehnungen der ersten und zweiten Mover 200, 513 berücksichtigt werden. Bei einem einfachen Fall wird der geschätzte erste Fahrweg des ersten Movers 200 als eine gerade Bewegung des ersten Movers 200 in der ersten Bewegungsrichtung 518 angesehen. Abhängig von der gewählten Ausführungsform kann zusätzlich zur ersten Bewegungsrichtung 518 die aktuelle erste Geschwindigkeit des ersten Movers 200 für eine Schätzung des ersten Fahrweges berücksichtigt werden. Bei diesem Fall wird der geschätzte erste Fahrweg anhand der ersten Bewegungsrichtung 518 und der aktuellen ersten Geschwindigkeit des ersten Movers 200 geschätzt. In einer weiteren Ausführung wird zusätzlich zur ersten Geschwindigkeit des ersten Movers 200 auch die aktuelle erste Beschleunigung des ersten Movers 200 bei der Schätzung des ersten Fahrweges berücksichtigt und der geschätzte erste Fahrweg anhand der aktuellen ersten Bewegungsrichtung 518, der aktuellen ersten Geschwindigkeit und anhand der aktuellen ersten Beschleunigung berechnet.

Ergibt die Überprüfung beim weiteren vierten Programmpunkt 830, dass aufgrund des ermittelten zweiten Fahrweges 517 und unter Berücksichtigung des geschätzten ersten Fahrwegs keine Kollision des zweiten Movers 513 mit dem ersten Mover 200 für einen vorgebbaren Zeithorizont auftreten wird, so wird die Gefahr einer Kollision verneint und es wird zum weiteren fünften Programmpunkt 840 verzweigt. Dies ist für die einfachste Ausführungsform, bei der nur die erste Bewegungsrichtung 518 berücksichtigt wird, zu den in Fig. 7 und 8 dargestellten Zeitpunkten der Fall, da hier die erste Bewegungsrichtung 518 des ersten Movers 200 den zweiten Fahrweg 517 des zweiten Movers 513 nicht kreuzt.

Beim weiteren fünften Programmpunkt 840 steuert die Steuereinheit 506 die Magnetfelderzeuger 127 der Sektoren 501 in der Weise an, dass der zweite Mover 513 auf dem zweiten Fahrweg 517 über die Antriebsfläche 510 in Richtung auf den zweiten Zielpunkt 516 weiterbewegt wird.

Anschließend wird zum weiteren ersten Programmpunkt 800 verzweigt und das Programm startet erneut beim weiteren ersten Programmpunkt 800.

Ergibt die Überprüfung beim weiteren vierten Programmpunkt 830, dass die Gefahr einer Kollision besteht, so wird in einem folgenden weiteren sechsten Programmpunkt 850 der zweite Fahrweg 517 in der Weise verändert, dass eine Kollision vermieden wird. Die Gefahr einer Kollision ist hierbei zu dem in der Fig. 9 dargestellten Zeitpunkt erkennbar, weil hier die erste Bewegungsrichtung 518 des ersten Movers 200 den zweiten Fahrweg 517 des zweiten Movers 513 kreuzt. Bei der Veränderung des zweiten Fahrwegs 517 gemäß dem weiteren sechsten Programmpunkt 850 können die Bewegungsrichtung und/oder die Geschwindigkeit und/oder die Beschleunigung des zweiten Movers 513 in der Weise verändert werden, dass eine Kollision mit dem ersten Mover 200 gemäß dem geschätzten ersten Fahrweg vermieden wird. Abhängig von der gewählten Ausführungsform kann anstelle oder zusätzlich zu der Änderung des zweiten Fahrweges 517 auch der erste Fahrweg 503 des ersten Movers 200 in der Weise geändert werden, dass eine Kollision zwischen dem ersten Mover 200 und dem zweiten Mover 513 vermieden wird. Für die Vermeidung der Kollision der zwei Mover 200, 513 können entsprechende Strategien im Datenspeicher 512 abgelegt sein. Beispielsweise kann eine Richtungsänderung oder eine Geschwindigkeitsänderung des ersten Movers 200 und/oder des zweiten Movers 513 bevorzugt werden.

Nach dem weiteren sechsten Programmpunkt 850 wird zum weiteren ersten Programmpunkt 800 zurückverzweigt und das Programm wird erneut durchlaufen.

Da sich jedoch der erste Mover 200 aufgrund seiner eigenen Bewegung stets in eine andere Richtung als der geschätzten ersten Richtung bewegen kann, muss der beschriebene Programmdurchlauf in vorgegebenen Zeitabständen wiederholt werden. Somit wird das Programm zyklisch in vorgegebenen Zeitabständen wiederholt durchlaufen. Der Zeitzyklus, in dem das Programm zyklisch durchlaufen wird, kann in einem Bereich zwischen 100µs bis 400µs oder auch in einem Bereich von bis zu 2ms oder mehr liegen.

Eine weitere Reduktion der Rechenkapazität und der Datenaustauschmenge kann bei einer nicht dargestellten Ausführungsform dadurch erreicht werden, dass anstelle des ermittelten ersten Fahrweges 503 und der Berücksichtigung des geschätzten zweiten Fahrweges bzw. anstelle des ermittelten zweiten Fahrweges 517 und der Berücksichtigung des geschätzten ersten Fahrweges bei der ersten oder zweiten Wegplanung nur ein Vergleich der aktuellen ersten Bewegungsrichtung 514 mit der aktuellen zweiten Bewegungsrichtung 518 vorgenommen wird, so dass kein Vergleich mehr zum ermittelten ersten Fahrweg 503 bzw. ermittelten zweiten Fahrweg 517 durchgeführt werden muss.

Die Steuereinheit 506 kann, wie in den Fig. 7 bis 9 dargestellt, die erste Wegplanung mit einem ersten Planungsprogramm 901 und beispielsweise die zweite Wegplanung mit einem zweiten Planungsprogramm 902 ausführen. Zudem kann abhängig von der gewählten Ausführungsform der geschätzte erste Fahrweg von dem ersten Planungsprogramm 901 und die Schätzung des zweiten Fahrweges vom zweiten Planungsprogramm 902 ermittelt werden. Somit muss für die Durchführung der ersten Wegplanung und die Abschätzung einer möglichen Kollision zwischen dem ersten Mover 200 und dem zweiten Mover 513 vom zweiten Planungsprogramm 902 nur der geschätzte zweite Fahrweg an das erste Planungsprogramm 901 übermittelt werden. In analoger Weise muss für die zweite Wegplanung nur der geschätzte erste Fahrweg vom ersten Planungsprogramm 901 an das zweite Planungsprogramm 902 übermittelt werden.

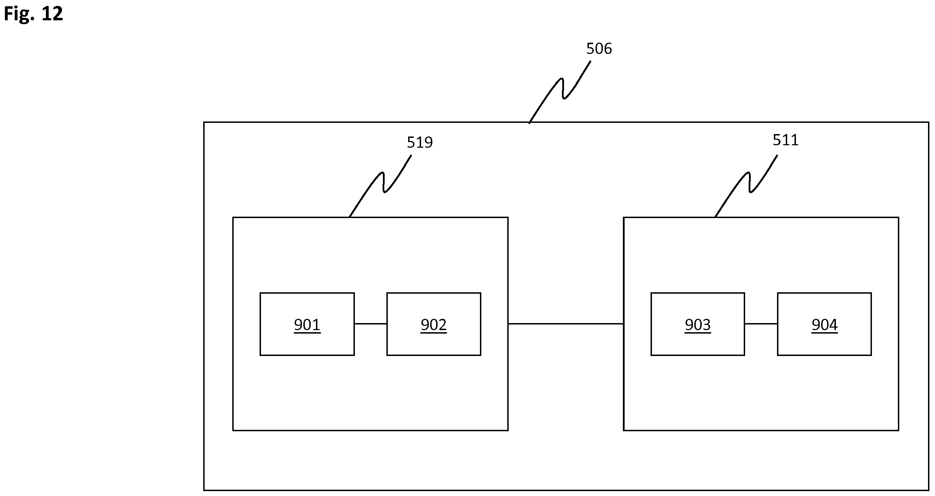

**Fig. 12** zeigt eine Ausführungsform, bei der die Steuereinheit 506 in eine erste Teilsteuereinheit 519 und zusätzlich in eine zweite Teilsteuereinheit 511 aufgeteilt sein kann, wobei die erste Teilsteuereinheit 519 mit der zweiten Teilsteuereinheit 511 Daten austauschen kann. Die zweite Teilsteuereinheit 511 weist wenigstens ein erstes weiteres Planungsprogramm 903 oder auch ein zweites weiteres Planungsprogramm 904 auf. Bei dieser Anordnung kann die erste Wegplanung von der ersten Teilsteuereinheit 519 und die zweite Wegplanung von der zweiten Teilsteuereinheit 511 durchgeführt werden. Dabei wird der geschätzte erste Fahrweg von der ersten Teilsteuereinheit 519 an die zweite Teilsteuereinheit 511 übertragen. Zudem wird der geschätzte zweite Fahrweg von der zweiten Teilsteuereinheit 511 an die erste Teilsteuereinheit 519 übertragen. Die ersten und zweiten Teilsteuereinheiten 519, 511 können beispielsweise verschiedene Rechenkerne eines Rechensystems darstellen.

Mithilfe des beschriebenen Verfahrens ist es nicht erforderlich, dass komplizierte Informationen über eine exakte Pfadplanung und Dynamikplanung, das heißt eine Fahrwegplanung der ersten und zweiten Mover 200, 513, bei der Fahrwegplanung eines ersten oder zweiten Movers 200, 513 und einer Kollisionsvermeidung zwischen den zwei Movern 200, 513 ausgetauscht oder berücksichtigt werden müssen. Beispielsweise kann der geschätzte Fahrweg des ersten und/oder zweiten Movers 200, 513, bei gleichbleibender Bewegungsrichtung und/oder gleichbleibender Geschwindigkeit und/oder gleichbleibender Beschleunigung und/oder gleichbleibendem Ruck linear extrapoliert werden. Zur Kollisionsvermeidung wird beispielsweise nur diese lineare Extrapolation für die Fahrwegplanung des oder der anderen ersten und/oder zweiten Mover 200, 513 berücksichtigt. Die Extrapolation ist möglicherweise nur für einen kleinen Zeitraum gültig, da aber die Fahrwegplanung in der Regel zyklisch überarbeitet wird, ist die Extrapolation ausreichend, um eine Kollision zu vermeiden. Zudem bietet die Extrapolation den Vorteil, dass Daten von weiter entfernten Movern nicht in die Kollisionsplanung einbezogen werden müssen. Wird für den vorgegebenen Zeithorizont abgeschätzt, dass der geschätzte zweite Fahrweg des zweiten Movers 513 nicht zu einer Kollision mit dem ersten Fahrweg 503 des ersten Movers führen kann, so muss der geschätzte zweite Fahrweg des zweiten Movers 513 bei der Wegplanung des ersten Fahrweges 503 des ersten Movers 200 nicht berücksichtigt werden.

Der Fahrweg beinhaltet einen geplanten Pfad und eine für die Zukunft berechnete Position des Movers entlang dem Pfad.

Mit dem beschriebenen Verfahren werden die Daten, die bei der Wegplanung berücksichtigt werden müssen, deutlich reduziert. Somit ist eine bessere Skalierbarkeit des Systems auch für eine größere Anzahl von Movern gegeben.

### Bezugszeichenliste

- 1: Planarantriebssystem
- 8: Oberseite
- 9: Unterseite
- 10: Statormodul
- 11: Statorfläche
- 12: erste Richtung
- 14: zweite Richtung
- 15: vertikale Richtung
- 18: Anschlussleitung
- 19: Modulgehäuse
- 30: Außenkante der Statorfläche
- 100: Statoreinheit
- 104: erste Statorlage
- 105: zweite Statorlage
- 106: dritte Statorlage
- 107: vierte Statorlage
- 110: erster Statorsektor
- 112: dritter Statorsektor
- 113: zweiter Statorsektor
- 114: vierter Statorsektor
- 120: erste Statorsegmente
- 121: zweite Statorsegmente
- 125: Leiterstreifen
- 126: weitere Leiterstreifen
- 127: Magnetfelderzeuger
- 200: Mover
- 201: Magnetanordnung
- 206: erste Läuferrichtung
- 208: zweite Läuferrichtung
- 210: erste Magneteinheit
- 211: Antriebsmagnet
- 220: zweite Magneteinheit
- 221: weiterer Antriebsmagnet
- 230: dritte Magneteinheit
- 240: vierte Magneteinheit
- 250: zweiter Magnetfelderzeuger
- 501: Sektor
- 502: erster Mover
- 503: erster Fahrweg
- 506: Steuereinheit
- 507: Startpunkt
- 508: Zielpunkt
- 509: Hindernis
- 510: Antriebsfläche
- 511: zweite Teilsteuereinheit
- 512: Datenspeicher
- 513: zweiter Mover
- 514: zweite Bewegungsrichtung
- 515: zweiter Startpunkt
- 516: zweiter Zielpunkt
- 517: zweiter Fahrweg
- 518: erste Bewegungsrichtung
- 519: erste Teilsteuereinheit
- 560: Sensor
- 901: erstes Planungsprogramm
- 902: zweites Planungsprogramm
- 903: weiteres Planungsprogramm
- 904: weiteres zweites Planungsprogramm

## Patentansprüche

1. Vorrichtung zum Vermeiden einer Kollision beim Antreiben von wenigstens zwei Movern (200, 513) auf einer Antriebsfläche (510), wobei jeder Mover (200, 513) wenigstens einen Magnetfelderzeuger (250) zum Erzeugen eines Magnetfeldes aufweist, wobei die Vorrichtung mehrere plattenförmige Sektoren (501) aufweist, wobei die Sektoren (501) jeweils zumindest einen elektrischen Magnetfelderzeuger (127) zum Erzeugen von Magnetfeldern aufweisen, wobei die Sektoren (501) die Antriebsfläche (510) bilden, wobei die Sektoren (501) mit einer Steuereinheit (506) verbunden sind, wobei die Steuereinheit (506) ausgebildet ist, um über eine entsprechende Steuerung einer Stromversorgung der Magnetfelderzeuger (127) der Sektoren (501) die Magnetfelder in der Weise zu erzeugen, dass die Mover (200, 513) wenigstens in einer Richtung über die Antriebsfläche (510) bewegbar sind, wobei die Steuereinheit (506) ausgebildet ist, um eine Wegplanung für die Mover (200) auszuführen, wobei die Steuereinheit (506) ausgebildet ist, um Fahrwege (503) für die Mover (200, 513) in der Weise zu ermitteln, dass eine Kollision der Mover (200, 513) vermieden wird, wobei die Steuereinheit (506) ausgebildet ist, um die Magnetfelderzeuger (127) der Sektoren (501) in der Weise mit Strom anzusteuern, dass die Mover (200) entlang der ermittelten Fahrwege (503) über die Antriebsfläche (510) bewegbar sind,
**dadurch gekennzeichnet,**
**dass** die Steuereinheit (506) ausgebildet ist, beim Ermitteln eines Fahrweges (503) für einen ersten Mover (200) jeweils geschätzte Fahrwege für die weiteren Mover (513) zu berücksichtigen, wobei bei Gefahr von Kollision zwischen den Movern die Fahrwege der Mover entsprechend den Movern vergebenen Prioritäten, die Vorfahrts- und Ausweichregeln festlegen, verändert werden, wobei nur für Mover mit niedrigerer Priorität eine Änderung ihres Fahrweges aufgrund der Schätzung der Fahrwege von Movern mit höherer Priorität durchgeführt wird, und wobei die geschätzten Fahrwege der weiteren Mover (513) in vorgegebenen Zeitabständen wiederholt ermittelt oder wiederholt empfangen und bei der Ermittlung des Fahrweges (503) für den ersten Mover (200) in den vorgegebenen Zeitabständen wiederholt berücksichtigt werden.

2. Vorrichtung nach Anspruch 1, wobei die Steuereinheit (506) ausgebildet ist, um die geschätzten Fahrwege anhand einer aktuellen Bewegungsrichtung (514) der weiteren Mover (513) zu ermitteln.

3. Vorrichtung nach Anspruch 1 oder 2, wobei die Steuereinheit (506) ausgebildet ist, um die geschätzten Fahrwege anhand einer aktuellen Geschwindigkeit und/oder einer Beschleunigung und/oder einer Änderung der Beschleunigung der weiteren Mover (513) zu ermitteln.

4. Vorrichtung nach einem der vorhergehenden Ansprüche, wobei die Steuereinheit (506) ausgebildet ist, um die geschätzten Fahrwege anhand einer linearen Extrapolation des aktuellen Fahrweges (517) der weiteren Mover (513) bei gleichbleibender Bewegungsrichtung und/oder Geschwindigkeit und/oder Beschleunigung und/oder Änderung der Beschleunigung zu ermitteln.

5. Vorrichtung nach einem der vorhergehenden Ansprüche, wobei die vorgegebenen Wiederhol-Zeitabständen Zeitabständen von 100µs bis 2000µs sind.

6. Vorrichtung nach einem der vorhergehenden Ansprüche, wobei die Steuereinheit (506) ausgebildet ist, um die geschätzten Fahrwege bei der ersten Wegplanung des ersten Fahrweges (503) zu berücksichtigen, wenn die geschätzten Fahrwege innerhalb eines vorgegebenen Zeitraumes den ermittelten ersten Fahrweg (503) kreuzen, wobei der vorgegebene Zeitraum vorzugsweise in einem Bereich von 100µs bis 2s liegt.

7. Vorrichtung nach einem der vorhergehenden Ansprüche, wobei die Steuereinheit (506) zumindest eine erste Teilsteuereinheit (519) und eine zweite Teilsteuereinheit (511) aufweist, wobei die erste Wegplanung für den ersten Mover (200) von der ersten Teilsteuereinheit (519) und die zweite Wegplanung für den weiteren Mover (513) von einer zweiten Teilsteuereinheit (511), oder wobei die erste Wegplanung für den ersten Mover (200) von einem ersten Planungsprogramm (901) und die zweite Wegplanung für den weiteren Mover (513) von einem zweiten Planungsprogramm (902) ausgeführt wird, und wobei der geschätzte erste Fahrweg des ersten Movers (200) von der ersten Teilsteuereinheit (519) oder von dem ersten Planungsprogramm (901) ermittelt wird, wobei der geschätzte zweite Fahrweg des weiteren Movers von der zweiten Teilsteuereinheit (511) oder von dem zweiten Planungsprogramm (902) ermittelt wird, und wobei der geschätzte zweite Fahrweg von der ersten Teilsteuereinheit (519) oder von dem ersten Planungsprogramm (901) empfangen wird, und wobei der geschätzte erste Fahrweg von der zweiten Teilsteuereinheit (511) oder von dem zweiten Planungsprogramm (902) empfangen wird.

8. Verfahren zum Vermeiden einer Kollision beim Antreiben von wenigstens zwei Movern (200, 513) auf einer Antriebsfläche (510), wobei jeder Mover (200, 513) wenigstens einen Magnetfelderzeuger zum Erzeugen eines Magnetfeldes aufweist, wobei die Vorrichtung mehrere plattenförmige Sektoren (501) aufweist, wobei die Sektoren (501) jeweils zumindest einen elektrischen Magnetfelderzeuger (127) zum Erzeugen von Magnetfeldern aufweisen, wobei die Sektoren (501) die Antriebsfläche (510) bilden, wobei die Sektoren (501) mit einer Steuereinheit (506) verbunden sind, wobei die Steuereinheit (506) ausgebildet ist, um über eine entsprechende Steuerung einer Stromversorgung der Magnetfelderzeuger (127) der Sektoren (501) die Magnetfelder in der Weise zu erzeugen, dass die Mover (200, 513) wenigstens in einer Richtung über die Antriebsfläche (510) bewegbar sind, wobei die Steuereinheit (506) ausgebildet ist, um eine Wegplanung für die Mover (200, 513) ausführen, wobei die Steuereinheit (506) ausgebildet ist, um Fahrwege (503) für die Mover (200, 513) in der Weise zu ermitteln, dass eine Kollision der Mover (200, 513) vermieden wird, wobei die Steuereinheit (506) ausgebildet ist, um die Magnetfelderzeuger (127) der Sektoren (501) in der Weise mit Strom anzusteuern, dass die Mover (200) entlang der ermittelten Fahrwege (503) über die Antriebsfläche (510) bewegbar sind,
**dadurch gekennzeichnet,**
**dass** beim Ermitteln eines Fahrweges (503) für einen ersten Mover (200) jeweils geschätzte Fahrwege für die weiteren Mover (513) berücksichtigt werden, wobei bei die Gefahr von Kollision zwischen den Movern die Fahrwege der Mover entsprechend den Movern vergebenen Prioritäten, die Vorfahrts- und Ausweichregeln festlegen, verändert werden, wobei nur für Mover mit niedrigerer Priorität eine Änderung ihres Fahrweges aufgrund der Schätzung der Fahrwege von Movern mit höherer Priorität durchgeführt wird, und wobei die geschätzten Fahrwege der weiteren Mover (513) in vorgegebenen Zeitabständen wiederholt ermittelt oder wiederholt empfangen und bei der Ermittlung des Fahrweges (503) für den ersten Mover (200) in den vorgegebenen Zeitabständen wiederholt berücksichtigt werden.

9. Verfahren nach Anspruch 8, wobei die geschätzte weiteren Fahrwege anhand einer aktuellen Bewegungsrichtung (514) der weiteren Mover (513) ermittelt werden.

10. Verfahren nach Anspruch 8 oder 9, wobei die geschätzten Fahrwege anhand einer aktuellen Geschwindigkeit und/oder Beschleunigung und/oder einer Änderung der Beschleunigung der weiteren Mover (513) ermittelt werden.

11. Verfahren nach einem der Ansprüche 8 bis 10, wobei die geschätzten Fahrwege anhand einer linearen Extrapolation des aktuellen Fahrweges (517) der weiteren Mover (513) bei gleichbleibender Bewegungsrichtung und/oder Geschwindigkeit und/oder Beschleunigung und/oder Änderung der Beschleunigung ermittelt wird.

12. Verfahren nach einem der Ansprüche 8 bis 11, wobei die vorgegebenen Wiederhol-Zeitabständen Zeitabständen von 100µs bis 2000µs sind.

13. Verfahren nach einem der Ansprüche 8 bis 12, wobei die geschätzten Fahrwege bei der ersten Wegplanung des ersten Fahrweges (503) berücksichtigt wird, wenn die geschätzten Fahrwege innerhalb eines vorgegebenen Zeitraumes den ermittelten ersten Fahrweg (503) kreuzen, wobei insbesondere der Zeitraum im Bereich von 100µs bis 2s liegt.

14. Verfahren nach einem der Ansprüche 8 bis 13, wobei eine erste Teilsteuereinheit (519) und eine zweite Teilsteuereinheit (511) vorgesehen sind, wobei die erste Wegplanung für den ersten Mover (200) von der ersten Teilsteuereinheit (519) und die zweite Wegplanung für den weiteren Mover (513) von der zweiten Teilsteuereinheit (511), oder wobei die erste Wegplanung für den ersten Mover (200) von einem ersten Planungsprogramm (901) und die zweite Wegplanung für den weiteren Mover (513) von einem zweiten Planungsprogramm (902) ausgeführt wird, und wobei der geschätzte erste Fahrweg des ersten Movers (200) von der ersten Teilsteuereinheit (519) oder von dem ersten Planungsprogramm (901) ermittelt wird, wobei der geschätzte zweite Fahrweg des weiteren Movers (513) von der zweiten Teilsteuereinheit (511) oder von dem zweiten Planungsprogramm (902) ermittelt wird, und wobei der geschätzte zweite Fahrweg von der ersten Teilsteuereinheit (519) oder von dem ersten Planungsprogramm (901) empfangen wird, und wobei der geschätzte erste Fahrweg von der zweiten Teilsteuereinheit (511) oder von dem zweiten Planungsprogramm (902) empfangen wird.

## Claims

1. Device for avoiding a collision during the driving of at least two movers (200, 513) over a drive surface (510), wherein each mover (200, 513) has at least one magnetic field generator (250) for generating a magnetic field, wherein the device has a plurality of plate-shaped sectors (501), wherein the sectors (501) each have at least one electrical magnetic field generator (127) for generating magnetic fields, wherein the sectors (501) form the drive surface (510), wherein the sectors (501) are connected to a control unit (506), wherein the control unit (506) is designed to generate the magnetic fields, through appropriate control of a power supply of the magnetic field generators (127) of the sectors (501), such that the movers (200, 513) are able to be moved at least in one direction over the drive surface (510), wherein the control unit (506) is designed to perform path planning for the movers (200), wherein the control unit (506) is designed to ascertain travel paths (503) for the movers (200, 513) such that a collision between the movers (200, 513) is avoided, wherein the control unit (506) is designed to activate the magnetic field generators (127) of the sectors (501) with power such that the movers (200) are able to be moved over the drive surface (510) along the ascertained travel paths (503), **characterized in that**
the control unit (506) is designed, when ascertaining a travel path (503) for a first mover (200), to take into consideration respectively estimated travel paths for the further movers (513), wherein, when there is a risk of collision between the movers, the travel paths of the movers are amended in accordance with priorities allocated to the movers, defining right of way and diversion rules, wherein only for movers of lower priority is a change of their travel path made based on the estimate of the travel paths of movers of higher priority, and wherein the estimated travel paths of the further movers (513) are ascertained repeatedly or received repeatedly at predefined time intervals and taken into consideration repeatedly at the predefined time intervals when ascertaining the travel path (503) for the first mover (200).

2. Device according to Claim 1, wherein the control unit (506) is designed to ascertain the estimated travel paths on the basis of a current direction of movement (514) of the further movers (513).

3. Device according to Claim 1 or 2, wherein the control unit (506) is designed to ascertain the estimated travel paths on the basis of a current speed and/or an acceleration and/or a change in the acceleration of the further movers (513).

4. Device according to one of the preceding claims, wherein the control unit (506) is designed to ascertain the estimated travel paths on the basis of a linear extrapolation of the current travel path (517) of the further movers (513) with the direction of movement and/or speed and/or acceleration and/or change in the acceleration remaining the same.

5. Device according to one of the preceding claims, wherein the predefined repetition time intervals are time intervals of 100 µs to 2000 µs.

6. Device according to one of the preceding claims, wherein the control unit (506) is designed to take into consideration the estimated travel paths during the first path planning of the first travel path (503) when the estimated travel paths intersect the ascertained first travel path (503) within a predefined time period, wherein the predefined time period is preferably in a range from 100 µs to 2 s.

7. Device according to one of the preceding claims, wherein the control unit (506) has at least a first sub-control unit (519) and a second sub-control unit (511), wherein the first path planning for the first mover (200) is performed by the first sub-control unit (519) and the second path planning for the further mover (513) is performed by a second sub-control unit (511), or wherein the first path planning for the first mover (200) is performed by a first planning program (901) and the second path planning for the further mover (513) is performed by a second planning program (902), and wherein the estimated first travel path of the first mover (200) is ascertained by the first sub-control unit (519) or by the first planning program (901), wherein the estimated second travel path of the further mover is ascertained by the second sub-control unit (511) or by the second planning program (902), and wherein the estimated second travel path is received from the first sub-control unit (519) or from the first planning program (901), and wherein the estimated first travel path is received from the second sub-control unit (511) or from the second planning program (902).

8. Method for avoiding a collision during the driving of at least two movers (200, 513) over a drive surface (510), wherein each mover (200, 513) has at least one magnetic field generator for generating a magnetic field, wherein the device has a plurality of plate-shaped sectors (501), wherein the sectors (501) each have at least one electrical magnetic field generator (127) for generating magnetic fields, wherein the sectors (501) form the drive surface (510), wherein the sectors (501) are connected to a control unit (506), wherein the control unit (506) is designed to generate the magnetic fields, through appropriate control of a power supply of the magnetic field generators (127) of the sectors (501), such that the movers (200, 513) are able to be moved at least in one direction over the drive surface (510), wherein the control unit (506) is designed to perform path planning for the movers (200, 513), wherein the control unit (506) is designed to ascertain travel paths (503) for the movers (200, 513) such that a collision between the movers (200, 513) is avoided, wherein the control unit (506) is designed to activate the magnetic field generators (127) of the sectors (501) with power such that the movers (200) are able to be moved over the drive surface (510) along the ascertained travel paths (503), **characterized in that**,
when ascertaining a travel path (503) for a first mover (200), respectively estimated travel paths for the further movers (513) are taken into consideration, wherein, when there is a risk of collision between the movers, the travel paths of the movers are amended in accordance with priorities allocated to the movers, defining right of way and diversion rules, wherein only for movers of lower priority is a change of their travel path made based on the estimate of the travel paths of movers of higher priority, and wherein the estimated travel paths of the further movers (513) are ascertained repeatedly or received repeatedly at predefined time intervals and taken into consideration repeatedly at the predefined time intervals when ascertaining the travel path (503) for the first mover (200).

9. Method according to Claim 8, wherein the estimated further travel paths are ascertained on the basis of a current direction of movement (514) of the further movers (513) .

10. Method according to Claim 8 or 9, wherein the estimated travel paths are ascertained on the basis of a current speed and/or acceleration and/or a change in the acceleration of the further movers (513).

11. Method according to one of Claims 8 to 10, wherein the estimated travel paths are ascertained on the basis of a linear extrapolation of the current travel path (517) of the further movers (513) with the direction of movement and/or speed and/or acceleration and/or change in the acceleration remaining the same.

12. Method according to one of Claims 8 to 11, wherein the predefined repetition time intervals are time intervals of 100 µs to 2000 µs.

13. Method according to one of Claims 8 to 12, wherein the estimated travel paths are taken into consideration during the first path planning of the first travel path (503) when the estimated travel paths intersect the ascertained first travel path (503) within a predefined time period, wherein the time period is in particular in a range from 100 µs to 2 s.

14. Method according to one of Claims 8 to 13, wherein provision is made for a first sub-control unit (519) and a second sub-control unit (511), wherein the first path planning for the first mover (200) is performed by the first sub-control unit (519) and the second path planning for the further mover (513) is performed by the second sub-control unit (511), or wherein the first path planning for the first mover (200) is performed by a first planning program (901) and the second path planning for the further mover (513) is performed by a second planning program (902), and wherein the estimated first travel path of the first mover (200) is ascertained by the first sub-control unit (519) or by the first planning program (901), wherein the estimated second travel path of the further mover (513) is ascertained by the second sub-control unit (511) or by the second planning program (902), and wherein the estimated second travel path is received from the first sub-control unit (519) or from the first planning program (901), and wherein the estimated first travel path is received from the second sub-control unit (511) or from the second planning program (902).

## Revendications

1. Dispositif permettant d'éviter une collision lors de l'entraînement d'au moins deux éléments de déplacement (200, 513) sur une surface d'entraînement (510), chaque élément de déplacement (200, 513) présentant au moins un générateur de champ magnétique (250) servant à générer un champ magnétique, le dispositif présentant plusieurs secteurs en forme de plaque (501), les secteurs (501) présentant respectivement au moins un générateur de champ magnétique (127) électrique pour générer des champs magnétiques, les secteurs (501) formant la surface d'entraînement (510), les secteurs (501) étant reliés à une unité de commande (506), dans lequel l'unité de commande (506) est réalisée pour générer les champs magnétiques par l'intermédiaire d'une commande adéquate d'une alimentation électrique des générateurs de champ magnétique (127) des secteurs (501) de telle sorte que les éléments de déplacement (200, 513) peuvent être déplacés au moins dans une direction sur la surface d'entraînement (510), l'unité de commande (506) étant réalisée pour effectuer une planification de trajectoire pour les éléments de déplacement (200), l'unité de commande (506) étant réalisée pour déterminer des trajectoires (503) pour les éléments de déplacement (200, 513) de façon à éviter une collision des éléments de déplacement (200, 513), l'unité de commande (506) étant réalisée pour piloter à l'aide d'un courant électrique les générateurs de champ magnétique (127) des secteurs (501) de sorte que les éléments de déplacement (200) peuvent être déplacés le long des trajectoires déterminées (503) sur la surface d'entraînement (510),
**caractérisé en ce que** lors de la détermination d'une trajectoire (503) pour un premier élément de déplacement (200), l'unité de commande (506) est réalisée pour tenir compte de trajectoires estimées respectivement pour les autres éléments de déplacement (513), dans lequel, dans le cas d'un risque de collision entre les éléments de déplacement, les trajectoires des éléments de déplacement sont modifiées en fonction de priorités attribuées aux éléments de déplacement qui définissent des règles de priorité et d'évitement, dans lequel une modification de la trajectoire n'est effectuée que pour des éléments de déplacement de priorité inférieure en raison de l'estimation des trajectoires des éléments de déplacement de priorité supérieure, et dans lequel les trajectoires estimées des autres éléments de déplacement (513) sont déterminées de manière répétée ou sont reçues de manière répétée à intervalles de temps prédéfinis, et sont prises en compte de manière répétée aux intervalles de temps prédéfinis lors de la détermination de la trajectoire (503) pour le premier élément de déplacement (200).

2. Dispositif selon la revendication 1, dans lequel l'unité de commande (506) est réalisée pour déterminer les trajectoires estimées à l'aide d'une direction de déplacement actuelle (514) des autres éléments de déplacement (513).

3. Dispositif selon la revendication 1 ou 2, dans lequel l'unité de commande (506) est réalisée pour déterminer les trajectoires estimées à l'aide d'une vitesse actuelle et/ou d'une accélération et/ou d'une variation de l'accélération des autres éléments de déplacement (513).

4. Dispositif selon l'une quelconque des revendications précédentes, dans lequel l'unité de commande (506) est réalisée pour déterminer les trajectoires estimées à l'aide d'une extrapolation linéaire de la trajectoire actuelle (517) des autres éléments de déplacement (513) à direction de déplacement et/ou vitesse et/ou accélération constantes et/ou en cas de variation de l'accélération.

5. Dispositif selon l'une quelconque des revendications précédentes, dans lequel les intervalles de temps de répétition prédéfinis sont des intervalles de temps de 100 µs à 2000 µs.

6. Dispositif selon l'une quelconque des revendications précédentes, dans lequel l'unité de commande (506) est réalisée pour tenir compte des trajectoires estimées lors de la première planification de trajectoire de la première trajectoire (503) si les trajectoires estimées croisent la première trajectoire déterminée (503) à l'intérieur d'une période prédéfinie, la période prédéfinie étant de préférence comprise dans une plage de 100 µs à 2 s.

7. Dispositif selon l'une quelconque des revendications précédentes, dans lequel l'unité de commande (506) présente au moins une première sous-unité de commande (519) et une deuxième sous-unité de commande (511), la première planification de trajectoire pour le premier élément de déplacement (200) étant effectuée par la première sous-unité de commande (519) et la deuxième planification de trajectoire pour l'autre élément de déplacement (513) étant effectuée par une deuxième sous-unité de commande (511), ou la première planification de trajectoire pour le premier élément de déplacement (200) étant effectuée par un premier programme de planification (901) et la deuxième planification de trajectoire pour l'autre élément de déplacement (513) étant effectuée par un deuxième programme de planification (902), et dans lequel la première trajectoire estimée du premier élément de déplacement (200) est déterminée par la première sous-unité de commande (519) ou par le premier programme de planification (901), dans lequel la deuxième trajectoire estimée de l'autre élément de déplacement est déterminée par la deuxième sous-unité de commande (511) ou par le deuxième programme de planification (902), et dans lequel la deuxième trajectoire estimée est reçue par la première sous-unité de commande (519) ou par le premier programme de planification (901), et dans lequel la première trajectoire estimée est reçue par la deuxième sous-unité de commande (511) ou par le deuxième programme de planification (902).

8. Procédé permettant d'éviter une collision lors de l'entraînement d'au moins deux éléments de déplacement (200, 513) sur une surface d'entraînement (510), chaque élément de déplacement (200, 513) présentant au moins un générateur de champ magnétique servant à générer un champ magnétique, dans lequel le dispositif présente plusieurs secteurs en forme de plaque (501), les secteurs (501) présentant respectivement au moins un générateur de champ magnétique (127) électrique pour générer des champs magnétiques, les secteurs (501) formant la surface d'entraînement (510), les secteurs (501) étant reliés à une unité de commande (506), dans lequel l'unité de commande (506) est réalisée pour générer les champs magnétiques par l'intermédiaire d'une commande adéquate d'une alimentation électrique des générateurs de champ magnétique (127) des secteurs (501) de telle sorte que les éléments de déplacement (200, 513) peuvent être déplacés au moins dans une direction sur la surface d'entraînement (510), l'unité de commande (506) étant réalisée pour effectuer une planification de trajectoire pour les éléments de déplacement (200, 513), l'unité de commande (506) étant réalisée pour déterminer des trajectoires (503) pour les éléments de déplacement (200, 513) de façon à éviter une collision des éléments de déplacement (200, 513), l'unité de commande (506) étant réalisée pour piloter à l'aide d'un courant électrique les générateurs de champ magnétique (127) des secteurs (501) de sorte que les éléments de déplacement (200) peuvent être déplacés le long des trajectoires déterminées (503) sur la surface d'entraînement (510),
**caractérisé en ce que** lors de la détermination d'une trajectoire (503) pour un premier élément de déplacement (200), des trajectoires estimées respectivement pour les autres éléments de déplacement (513) sont prises en compte, dans lequel, dans le cas d'un risque de collision entre les éléments de déplacement, les trajectoires des éléments de déplacement sont modifiées en fonction de priorités attribuées aux éléments de déplacement qui définissent des règles de priorité et d'évitement, dans lequel une modification de la trajectoire n'est effectuée que pour des éléments de déplacement de priorité inférieure en raison de l'estimation des trajectoires des éléments de déplacement de priorité supérieure, et dans lequel les trajectoires estimées des autres éléments de déplacement (513) sont déterminées de manière répétée ou sont reçues de manière répétée à intervalles de temps prédéfinis, et sont prises en compte de manière répétée aux intervalles de temps prédéfinis lors de la détermination de la trajectoire (503) pour le premier élément de déplacement (200).

9. Procédé selon la revendication 8, dans lequel les autres trajectoires estimées sont déterminées à l'aide d'une direction de déplacement actuelle (514) des autres éléments de déplacement (513).

10. Procédé selon la revendication 8 ou 9, dans lequel les trajectoires estimées sont déterminées à l'aide d'une vitesse et/ou accélération actuelles et/ou d'une variation de l'accélération des autres éléments de déplacement (513).

11. Procédé selon l'une quelconque des revendications 8 à 10, dans lequel les trajectoires estimées sont déterminées à l'aide d'une extrapolation linéaire de la trajectoire actuelle (517) des autres éléments de déplacement (513) à direction de déplacement et/ou vitesse et/ou accélération constantes et/ou en cas de variation de l'accélération.

12. Procédé selon l'une quelconque des revendications 8 à 11, dans lequel les intervalles de temps de répétition prédéfinis sont des intervalles de temps de 100 µs à 2000 µs.

13. Procédé selon l'une quelconque des revendications 8 à 12, dans lequel les trajectoires estimées lors de la première planification de trajectoire de la première trajectoire (503) sont prises en compte si les trajectoires estimées croisent la première trajectoire déterminée (503) à l'intérieur d'une période prédéfinie, dans lequel en particulier la période est comprise dans la plage de 100 µs à 2 s.

14. Procédé selon l'une quelconque des revendications 8 à 13, dans lequel une première sous-unité de commande (519) et une deuxième sous-unité de commande (511) sont prévues, la première planification de trajectoire pour le premier élément de déplacement (200) étant effectuée par la première sous-unité de commande (519) et la deuxième planification de trajectoire pour l'autre élément de déplacement (513) étant effectuée par la deuxième sous-unité de commande (511), ou dans lequel la première planification de trajectoire pour le premier élément de déplacement (200) est effectuée par un premier programme de planification (901) et la deuxième planification de trajectoire pour l'autre élément de déplacement (513) est effectuée par un deuxième programme de planification (902), et dans lequel la première trajectoire estimée du premier élément de déplacement (200) est déterminée par la première sous-unité de commande (519) ou par le premier programme de planification (901), dans lequel la deuxième trajectoire estimée de l'autre élément de déplacement (513) est déterminée par la deuxième sous-unité de commande (511) ou par le deuxième programme de planification (902), et dans lequel la deuxième trajectoire estimée est reçue par la première sous-unité de commande (519) ou par le premier programme de planification (901), et dans lequel la première trajectoire estimée est reçue par la deuxième sous-unité de commande (511) ou par le deuxième programme de planification (902).
